(19) Europäisches Patentamt
European Patent Office
Office européen des brevets

(11) EP 3 451 039 A1

(12) **EUROPEAN PATENT APPLICATION**
published in accordance with Art. 153(4) EPC

(43) Date of publication:
**06.03.2019 Bulletin 2019/10**

(21) Application number: **17789730.3**

(22) Date of filing: **28.04.2017**

(51) Int Cl.:
***G02B 17/08*** (2006.01) ***G02B 13/16*** (2006.01)
***G02B 13/18*** (2006.01) ***G03B 21/14*** (2006.01)

(86) International application number:
**PCT/JP2017/017089**

(87) International publication number:
**WO 2017/188449 (02.11.2017 Gazette 2017/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.04.2016 JP 2016090399**

(71) Applicant: **Nittoh Inc.**
**Suwa-shi, Nagano 392-0131 (JP)**

(72) Inventor: **MATSUO, Takahiko**
**Suwa-shi**
**Nagano 392-0021 (JP)**

(74) Representative: **Körber, Martin Hans**
**Mitscherlich PartmbB**
**Patent- und Rechtsanwälte**
**Sonnenstrasse 33**
**80331 München (DE)**

(54) **OPTICAL SYSTEM HAVING LENS INCLUDING AREAS HAVING DIFFERENT CHARACTERISTICS**

(57) There is provided an optical system (1) that includes at least one lens. The at least one lens includes a first lens (L21), through an eccentric part of the first lens with respect to an optical axis (7), a light beam for forming an image passing eccentrically with respect the optical axis. At least one surface of the first lens includes a plurality of regions with different optical characteristics that can be switched by a focusing unit (52) rotating the first lens about the optical axis as an axis of rotation. A typical example of a plurality of regions include a first region for forming an image at a near distance and a second region for forming an image at a far distance.

Fig. 1

9
100
10
IM1
8
5
S16
7
L11
L12 L13
L14
L15
L16
S15
52
51
L21
L22
L23
L24 L25
IM2
M1
BL1
BL2
1
SS1
SS2
S2
S1

EP 3 451 039 A1

## Description

### Technical Field

The present invention relates to an optical system with a lens including regions with different characteristics.

### Background Art

International Patent Publication No. WO2013-005444 discloses the provision of a projection optical system that projects from a first image plane on a reduction side to a second image plane on a magnification side and includes: a first refractive optical system, which has eight lenses and forms a first intermediate image on the magnification side using light incident from the reduction side; a second refractive optical system, which has six lenses and forms the first intermediate image on the reduction side into a second intermediate image on the magnification side; and a first reflective optical system including a first reflective surface with positive refractive power that is positioned on the magnification side of the second intermediate image.

### Summary of Invention

In an optical system which includes lenses, a plurality of lens surfaces are required to correct various aberrations and to adjust the focal position, resulting in a tendency for the number of lenses to increase. On the other hand, to realize a low-cost, lightweight, and compact optical system, a high-performance system with a simple configuration is desirable.

One aspect of the present invention is an optical system having at least one lens. The at least one lens includes a first lens, wherein a light beam for forming an image passes eccentrically with respect to the optical axis through an eccentric part of the first lens with respect to an optical axis. In addition, at least one surface of the first lens includes a plurality of regions with different optical characteristics that can be switched by rotating the first lens about the optical axis as an axis of rotation. The optical system may include a plurality of lenses disposed along a common optical axis, with the plurality of lenses including the first lens.

Optical systems that are designed so that light is incident or emitted at an angle with respect to the optical axis and the like are sometimes designed so that a light beam (light path) that passes inside the optical system passes an eccentrical position (offset position, off-center position) with respect to the optical path. For a lens or lenses disposed at a position where a light beam passes at an eccentrical position, a part of the lens is used for forming an image and the other part (or other area) is not used for forming an image. In the optical system according to the present invention, a plurality of regions with different optical characteristics are provided on the first lens, and by rotating the first lens, it is possible to switch the optical characteristics of an eccentrical area passed by the light beam. Accordingly, it is possible to provide an optical system with desired performance that has a simple configuration, for example, a low number of lenses.

The plurality of regions may include a first region for forming an image at a near distance (shorter distance) and a second region for forming an image at a far distance (longer distance). The first lens may be at least one of focus adjusting lens or lenses (focusing lenses) that are moved along the optical axis to adjust focus. The first lens may be a lens that does not move along the optical axis to adjust focus, and in this case, it is possible to split a mechanism that rotates the lens and a mechanism that moves the focus adjusting lens along the optical axis. This means that it is possible to simplify the mechanism that drives the lenses.

At least one surface of the first lens may include regions that are rotationally asymmetric. Regions with different optical characteristics may be rotationally asymmetric. The plurality of regions may include aspherical surfaces that are rotationally asymmetric and have the same (i.e., a common) radius of curvature. The plurality of regions may include aspherical surfaces that are rotationally asymmetric and have the same radius of curvature and conic coefficient, and may include aspherical surfaces that have the same radius of curvature, conic coefficient, and low-order aspheric coefficients. The at least one surface may include a free-formed surface. The other surface of the first lens may be flat.

The plurality of regions may be regions that do not straddle the optical axis. At least one surface may include a common or shared region that straddles the optical axis and is passed by a light beam together with any of a plurality of regions. The at least one surface may include a region for near distance, a region for far distance, and a third region that is a shared with the near region and the far region.

To set or define the plurality of regions, a ratio to an area SA0 of the at least one surface, of an area SA1 of a part of the surface through which the light beam passes eccentrically may satisfy a condition (1) below.

$$0.25 \leq SA1/SA0 \leq 0.7 \quad \ldots (1)$$

The plurality of lenses may include a first subsystem that forms a first intermediate image and may include a second subsystem that forms the first intermediate image into a second intermediate image. The optical system may further include a second optical system that forms the second intermediate image into a final image.

The optical system may include a driving unit that rotationally drives the first lens. The optical system may include a moving unit that moves the first lens along the optical axis to adjust focus.

Another aspect of the present invention is a projector that includes the optical system described above and an image unit that outputs an image to be projected by the optical system. Yet another aspect of the present invention is an image pickup apparatus that includes the optical system described above and a unit that picks up an image formed by the optical system.

Brief Description of Drawings

FIG. 1 is a diagram depicting one example of an optical system.

FIG. 2 is diagrams depicting a surface S15 of a lens L21, with FIG. 2(a) depicting a state where a near distance region is used and FIG. 2(b) depicting a state where a middle/far distance region is used.

FIG. 3 is a table depicting lens data.

FIG. 4 is a table depicting aspherical surfaces coefficients.

FIG. 5 is a table depicting aspherical surface coefficients of the lens L21.

FIG. 6 is a table depicting movement distances during focusing.

FIG. 7 depicts focusing states according to distance.

FIG. 8 is a table of free-form surface coefficients of a surface S15.

FIG. 9 is a table of free-form surface coefficients of a surface S16.

FIG. 10 is a diagram depicting a different example of an optical system.

FIG. 11 is a table depicting lens data.

FIG. 12 is diagrams depicting a surface S12 of a lens L15-2, with FIG. 12(a) depicting states where a near distance region and a shared region are used and FIG. 12(b) depicting states where a middle/far distance region and a shared region are used.

FIG. 13 is a table of free-form surface coefficients of a surface S12.

FIG. 14 depicts focusing states according to distance.

FIG. 15 is a diagram depicting a different example of an optical system.

FIG. 16 is diagrams depicting a surface S13 of a lens L16, with FIG. 16(a) depicting states where a far distance region and a shared region are used and FIG. 16(b) depicting states where a middle/far distance region and a shared region are used.

FIG. 17 is a table of free-form surface coefficients of a surface S13.

FIG. 18 depicts focusing states according to distance.

FIG. 19 is a table depicting a ratio between lens area and optical path area.

FIG. 20 depicts one example of an image pickup apparatus including an optical system.

Description of Embodiments

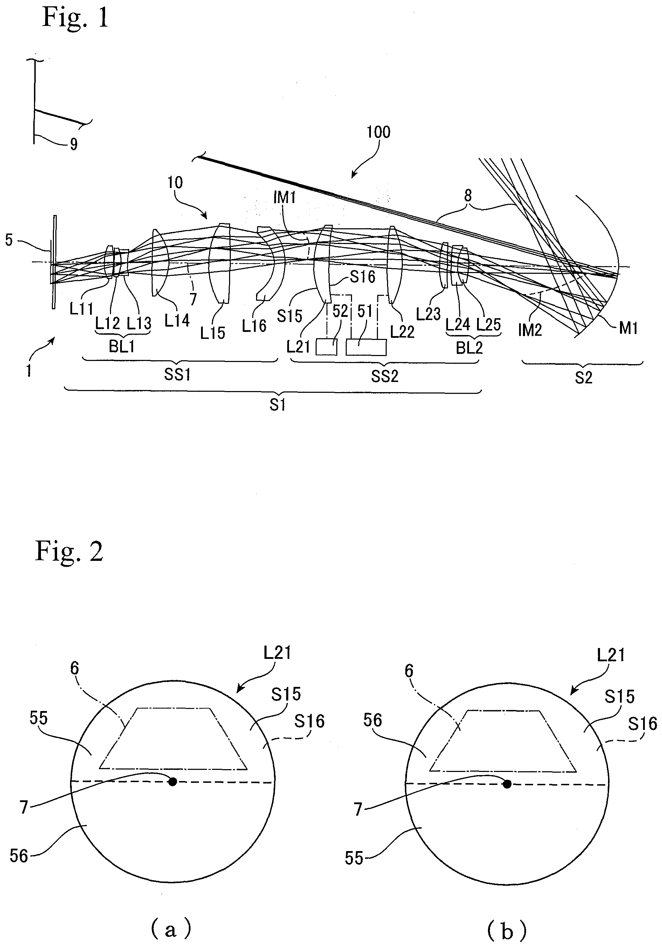

FIG. 1 depicts the overall configuration of an example of a projector including an example of an optical system according to the present invention. The projector 100 includes an optical system 1 that projects light and an image unit 5 that is disposed on the reduction side and outputs images to be projected. The optical system 1 includes a projection optical system 10 that projects images outputted or made on the image plane of the image unit (light modulator, light valve) 5 on the reduction side onto a screen 9 or a wall surface on the magnification side. The image unit (imaging unit) 5 may be any device capable of forming an image, such as an LCD, a digital mirror device (DMD), or organic EL, and may be a single-panel type or may use a method where images of the respective colors are separately formed. The image unit 5 may be a light-emitting type or may be an illuminated type. In the case of an illuminated type, the projector 100 may further include an illumination optical system (not illustrated). The screen 9 may be a wall surface, a white board, or the like, and the projector 100 may be a front projector or a rear projector that includes the screen 9.

The projection optical system 10 includes a first optical system (first system) S1 including a plurality of lenses and a second optical system (second system) S2 including a first reflective surface M1 with positive refractive power that reflects light outputted from the first optical system S1 and projects the light onto the screen 9 as projection light 8. The first optical system S1 is a refractive optical system (lens system) that forms the first intermediate image IM1, which is formed inside the first optical system S1 by light incident from the reduction side, into the second intermediate image IM2 that is closer to the magnification side than the first optical system S1. The first optical system S1 includes a first subsystem (first lens group, first refractive optical system) SS1 that is disposed on the reduction side (input side) and forms an image on the image unit 5 into the first intermediate image IM1 and a second subsystem (second lens group, second refractive optical system) SS2 that is disposed on the magnification side (output side) with the first intermediate image IM1 in between. The second subsystem SS2 forms the first intermediate image IM1 into the second intermediate image IM2 on the reduction side of the first reflective surface (or "mirror") M1. The mirror M1 magnifies and projects the second intermediate image IM2 onto the screen 9.

The first subsystem SS1 includes, in order from the reduction side, a biconvex lens L11, a cemented lens BL1 composed of a biconvex lens L12 and a biconcave lens L13, biconvex lenses L14 and L15, and a negative meniscus lens L16 that is convex on the magnification side. The second subsystem SS2 includes a positive meniscus lens L21 that is convex on the reduction side, a biconvex lens L22, a positive meniscus lens L23 that is convex on the reduction side, and a cemented lens BL2 composed of a negative meniscus lens L24 that is convex on the reduction side and a biconvex lens L25.

The optical system 1 further includes a first focusing unit 51 that moves the lenses L21 and L22 along an optical axis 7 for focusing purposes and a second focusing unit (driving unit) 52 for rotating (rotationally driving) the lens L21. The lenses L21 and L22 are focus adjusting lenses, and due to cooperative control of the focusing units 51 and 52 that move the lenses L21 and L22, the optical system 1 is capable of forming images at a short distance (near distance, short range) Dn of 450mm from the mirror M1 to the screen 9. In addition, it is possible to extend the image forming range to a distance (far distance, longer distance) Df of 1000mm from the mirror M1 to the screen 9. This means that by using this optical system 1, it is possible to provide the projector 100 that is a projector with a shorter focal distance of several tens of centimeters to the screen but still has an image forming performance where the ratio of the image forming range that is the ratio of the far distance Df to the near distance Dn, is two or higher (2.22 times).

As depicted in FIGS. 2(a) and 2(b), a surface S15 on the reduction side (that is image unit 5 side or image unit side) of the lens L21 is a rotationally asymmetric surface and includes a region 55 for forming images at a near distance Dn (that is the first region, the near distance region, or the region for focusing on near distance) and a region 56 for forming an image at a far distance Df and a middle distance (that is the second region, the far distance region, or middle/far distance region). The second focusing unit 52 functions as a driving unit that rotates the lens L21, which is the first lens, with the optical axis 7 as the axis of rotation. By rotating the lens L21, the focusing unit 52 switches the area through which the light beam 6 passes between the near distance region 55 and the middle/far distance region 56. The surface S16 on the magnification side (screen side) of the lens L21 is also a rotationally asymmetric surface and includes a near distance region 55 and a middle/far distance region 56. By having the second focusing unit 52 rotate the lens L21 by 180 degrees about the optical axis 7, it is possible to switch the region through which the light beam 6 passes.

The lens L21 is the lens disposed closest to the reduction side in the second subsystem SS2 and is disposed adjacent to the intermediate image IM1, which is formed by the first subsystem SS1, on the magnification side of the first intermediate image IM1. The first intermediate image IM1 is an image produced by reversing (inverting) the image formed on the image unit 5 with respect to the optical axis 7 and is formed at a position that is off-center (eccentrical) with respect to the optical axis 7 so that the first intermediate image IM1 does not straddle the optical axis 7. Accordingly, the light beam 6 for forming an image on the magnification side passes through regions on both surfaces S15 and S16 of the lens L21 that are off-center (eccentrical) with respect to the optical axis 7 and do not straddle the optical axis 7. For this reason, when the screen 9 is at a near distance, the second focusing unit 52 rotates the lens L21 to set the lens L21 so that the light beam 6 passes through the near distance region 55 on both surfaces S15 and S16. When the screen 9 is at a middle distance or a far distance, the second focusing unit 52 rotates the lens L21 to set the lens 21 so that the light beam 6 passes through the middle/far distance region 56 on both surfaces S15 and S16.

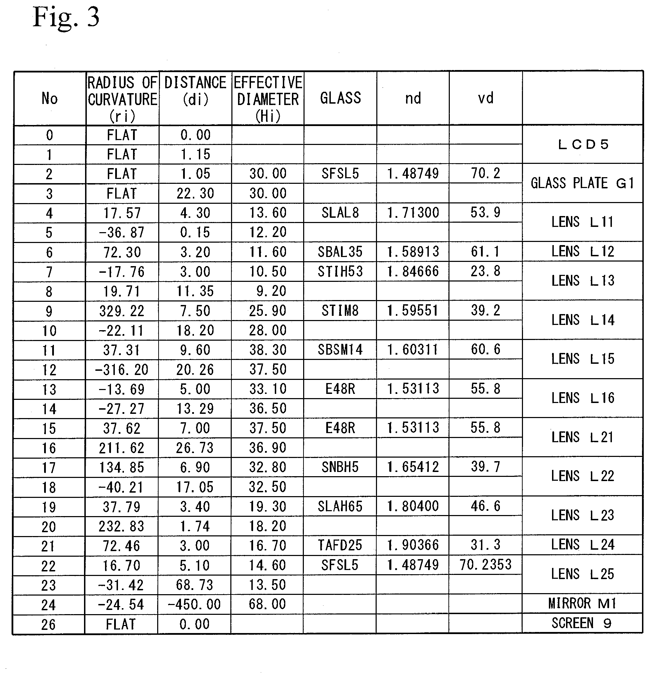

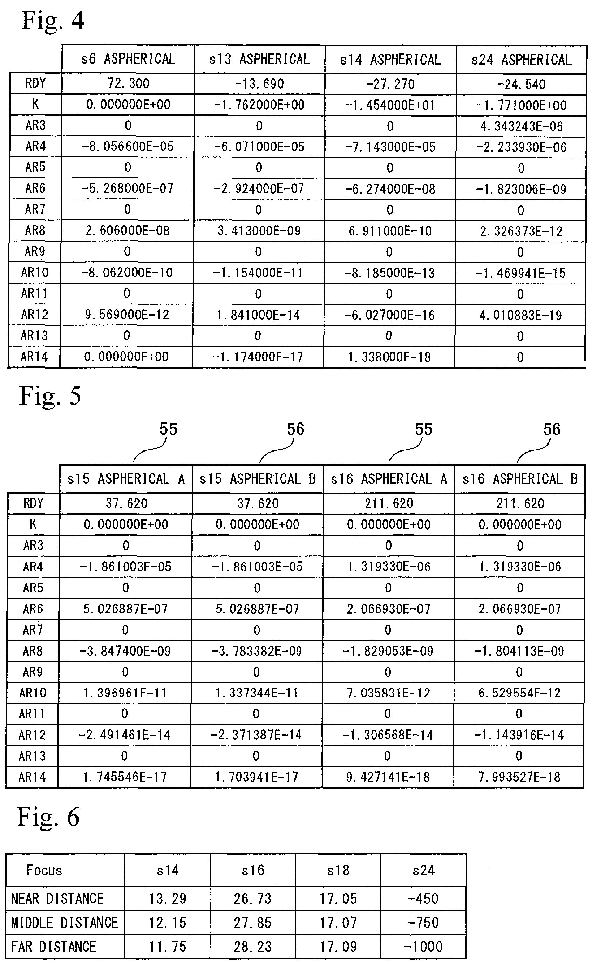

FIG. 3 depicts data of the respective elements in the projection optical system 10. FIGS. 4 and 5 depict aspherical data for the respective elements. FIG. 6 depicts the movement of the lenses L21 and L22 for adjusting focus as lens intervals (distances). In FIG. 6, S24 is the distance between the mirror M1 and the screen 9. In FIG. 3, "ri" (where i is an integer indicating the order, the same applies to the following) is the radius of curvature (in mm) of each element (for a lens, each lens surface) disposed in order from the reduction side, "di" is the distance (or "interval", in mm) between the surfaces of the respective elements disposed in order from the reduction side, and "Hi" is the effective diameter (in mm) of each element. The glass type for a case where an element is made of glass, the refractive index (d line) nd, and the Abbe number (d line) vd are also depicted in FIG 3.

The surface S6 on the reduction side of the lens L12, both surfaces S13 and S14 of the lens L16, both surfaces S15 and S16 of the lens L21, and the surface S24 of the mirror M1 are aspherical. Assuming that X is the coordinate in the optical axis direction, Y is the coordinate in a direction perpendicular to the optical axis, the direction in which light propagates is positive, and R is the paraxial radius of curvature, each aspherical surface is expressed by the following equation (A) using the coefficients RDY, K, and ARi (where i is 3 to 14) depicted in FIGS. 4 and 5. Note that "En" means "10 to the $n^{th}$ power".

$$X=(1/R)Y^2/[1+\{1-(1+K)(1/R)^2 Y^2\}^{1/2}]+\Sigma ARiY^i \quad \ldots (A)$$

As depicted in FIG. 5, both surfaces S15 and S16 of the lens L21 have an aspheric surface A that forms the near distance region 55 and an aspherical surface B that forms the far distance region 56. In the present embodiment, the aspherical surfaces A and B on the respective surfaces have the same radius of curvature RDY, conic coefficient K, and lower-order aspherical coefficients (in the present embodiment, AR3 to AR7), and differ in the higher-order aspherical coefficients AR8 onwards.

In this embodiment, as depicted in FIG. 2, at the lens L21, the light beam 6 passes a part or area, which is off-center from the optical axis 7 and does not straddle the optical axis 7, so as to be off-center with respect to the optical axis 7. Accordingly, by dividing both surfaces S15 and S16 of the lens L21 into two regions using a straight line that includes the optical axis (center of axis) 7 in the center and rotating the lens L21 about the optical axis 7 as the axis of rotation, it is possible to use the lens L21 as a lens with two different optical characteristics. The lens L21 is divided into two parts, the near distance region 55 and the middle/far distance region 56. The near distance region 55 is composed of the aspherical surface A, the middle/far distance region 56 is composed of the aspheric surface B, and these regions 55 and 56 are switched by rotating the lens L21 by 180 degrees. The near distance region 55 and the middle/far distance region 56 may be semicircular, or may have a polygonal shape, an elliptical shape, or other shape with at least an area through which the light beam 6 passes.

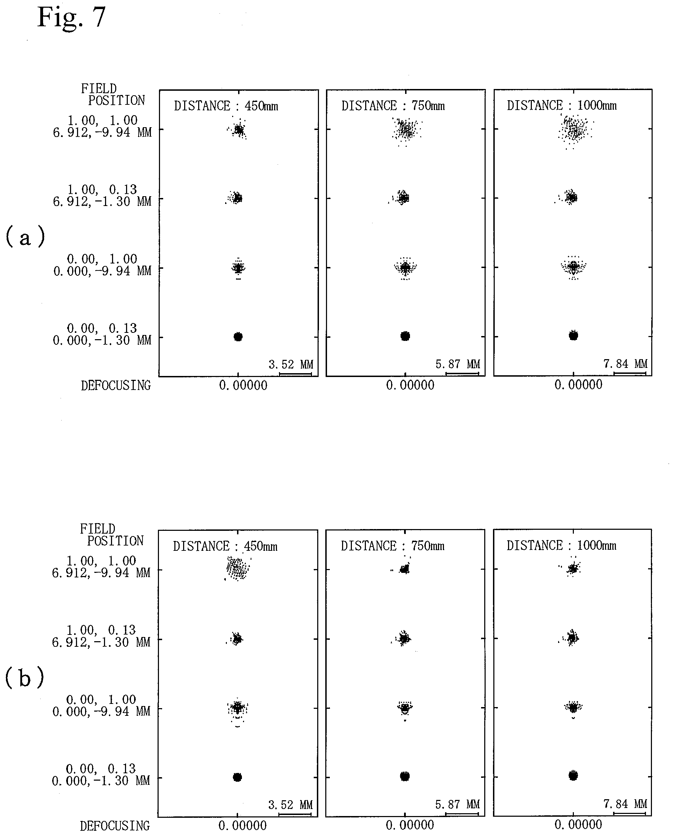

FIG. 7 depicts convergence states of dots in an image formed on the screen 9. FIG. 7(a) depicts states where the near distance region 55 is used and the distance between the screen 9 and the mirror M1 is set to a near distance (450 mm), a middle distance (750 mm), and a far distance (1000mm), and the lenses L21 and L22 are moved forward and backward by the first focusing unit 51 to adjust the focus. FIG. 7(b) depicts states where the middle/far distance region 56 is used, the distance between the screen 9 and the mirror M1 is set at the near distance, the middle distance, and the far distance, and focusing adjustment of the lenses L21 and L22 has been performed by the first focusing unit 51.

As depicted in FIG. 7(a), when the near distance region 55 is used, the convergence state of low-angle (that is, low field-angle) dots is favorable at every distance. On the other hand, although the convergence state of wide-angle (that is, high field-angle) dots is favorable at the near distance, the state could not be judged as favorable at the middle distance and the far distance.

As shown in FIG. 7(b), when the far distance region 56 is used, the convergence state of low-angle (that is, low field-angle) dots is favorable at every distance. On the other hand, although the convergence state of wide-angle (that is, high field-angle) dots is favorable at the middle distance and far distance, the state could not be judged as favorable at the near distance. Accordingly, by rotating the lens L21 at the near distance to set the light beam 6 so as to pass through the near distance region 55 and rotating the lens L21 at the middle and far distances to set the light beam 6 so as to pass through the middle/far distance region 56, it is possible to obtain a favorable focusing performance across the entire range from the near distance to the far distance.

The surface provided with the near distance region 55 and the middle/far distance region 56 may also be formed of a rotationally asymmetric free-formed surface where the regions 55 and 56 with the aspherical surfaces depicted in FIG. 5 are continuous with no clear boundary between them. One method of manufacturing a lens with different aspherical surfaces is a method of cutting and pasting lenses that each has the different aspherical surface. On the other hand, by forming both surfaces S15 and S16 of the lens L21 from free-formed surfaces, it is possible to integrally mold a lens that has regions with different characteristics using a single mold, which has the merit of avoiding problems such as physical off-center of lens and the like. This means that it is possible to manufacture a lens with a plurality of different regions with high precision.

One example of a method of defining a free-formed surface uses the XY polynomial (2) given below.

$$z = \frac{cr^2}{1+\sqrt{1-(1+k)c^2r^2}} + \sum C_j x^m y^n \quad \cdots (2)$$

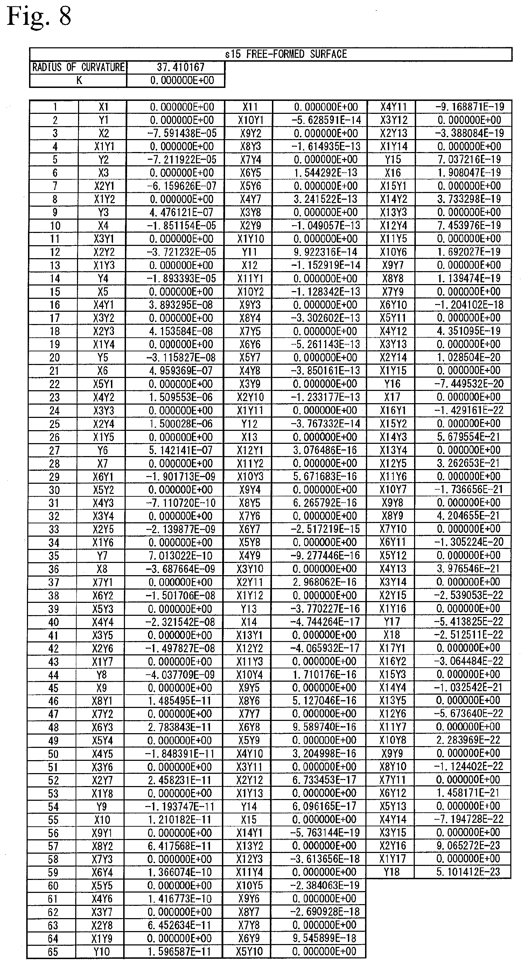

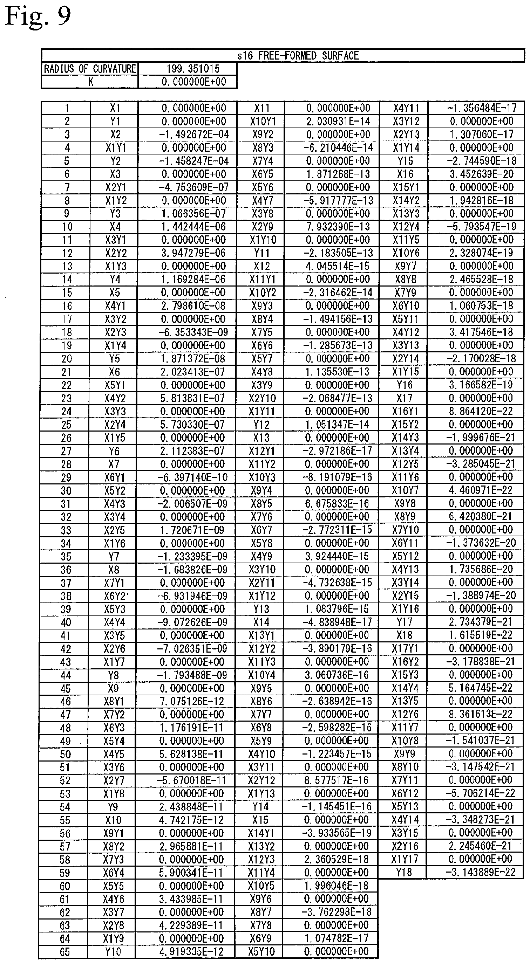

FIG. 8 depicts coefficients (free-form surface coefficients) for forming S15 that has the aspherical surfaces A and B depicted in FIG. 5 as a continuous free-form surface. FIG. 9 depicts coefficients (free-form surface coefficients) for forming S16 that has the aspherical surfaces A and B depicted in FIG. 5 as a continuous free-form surface.

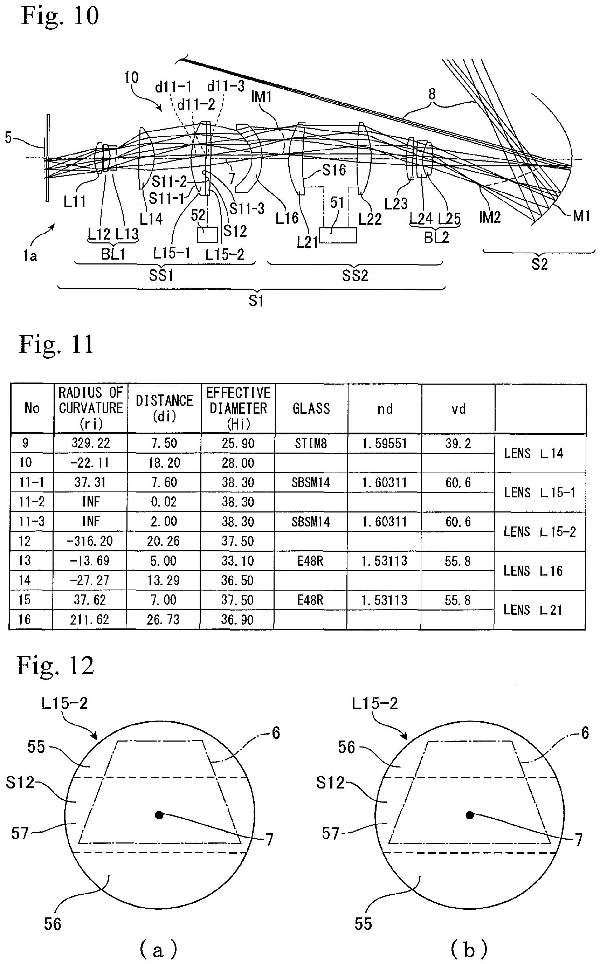

FIG. 10 depicts another example of an optical system. The basic configuration of this optical system 1a is the same as the optical system 1 described above. In the optical system 1a, the biconvex lens L15 of the first subsystem SS1 of the refractive optical system (first system) S1 of the projection optical system 10 is composed of a lens L15-1 (d11-1) and lens L15-2 (d11-3) disposed with a minimal air gap (d11-2). The lens 15-1 (d11-1) disposed on the reduction side is convex on the reduction side and flat on the magnification side. The lens L15-2 (d11-3) disposed on the magnification side of the lens 15-1 with the minimal air gap is convex on the magnification side and flat on the reduction side. In addition, the optical system 1a includes a first focusing unit 51 that moves the lenses L21 and L22 of the second subsystem SS2 along the optical axis 7 for focusing purposes and a second focusing unit 52 which rotates a lens L15-2 of the first subsystem SS1 around the optical axis (center axis) 7 of the lens L15-2 as the axis of rotation to switch between a near distance region and a middle/far distance region. The lens L21 of the second subsystem SS2 of the optical system 1a is not rotationally driven and the surfaces S15 and S16 on both sides are respectively fixed at the near-distance aspherical surface A of the optical system 1.

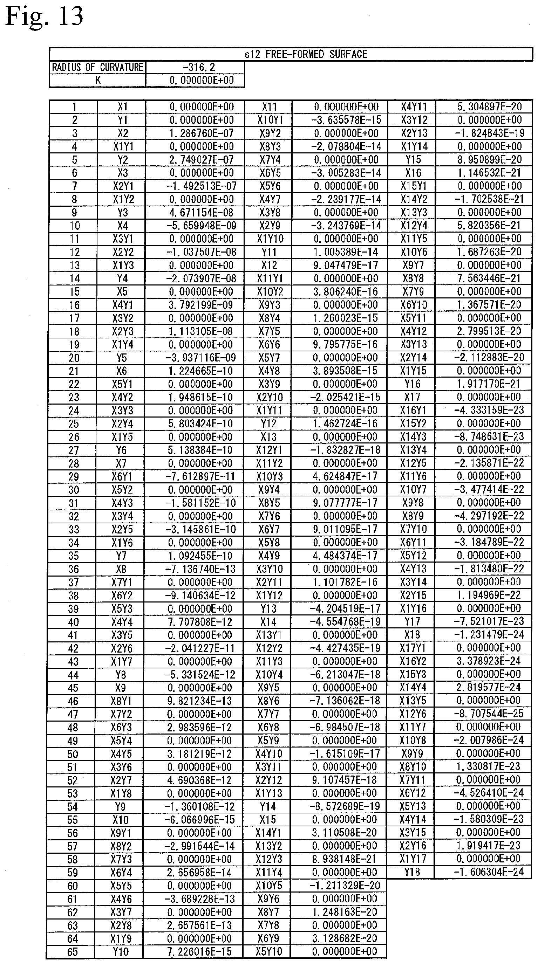

Out of the lens data of the optical system 1a, FIG. 11 depicts data on the lenses L15-1 and L15-2 and lenses before and after the lenses L15-1 and L15-2, which differ to the optical system 1. The surface S12 on the magnification side (screen side) of the lens L15-2 is a free-formed surface with three regions with different functions as depicted in FIG. 12. FIG. 13 depicts the free-formed surface coefficients of the surface S12.

As depicted in FIGS. 12(a) and 12(b), at the lens L 15-2, the light beam 6 passes an area that is eccentrically shifted toward the upper side in FIG. 10 of the surface S12 and includes the optical axis 7. The surface S12 includes a region 57 that is commonly used for near and far distance (shared region, third region) that includes the optical axis 7, a near distance region 55 disposed on the outside of the shared region 57, and a middle/far distance region 56 disposed on the opposite side of the shared region 57 to the near distance region 55. When the lens L15-2 is rotated to set the near distance region 55 on the upper side, the light beam 6 passes through the near distance region 55 and the shared region 57 that is commonly used for near and far distance. When the lens L15-2 is rotated by 180° to set the middle/far distance region 56 on the upper side, the light beam 6 passes through the middle/far distance region 56 and the shared region 57 that is commonly used for near and far distance.

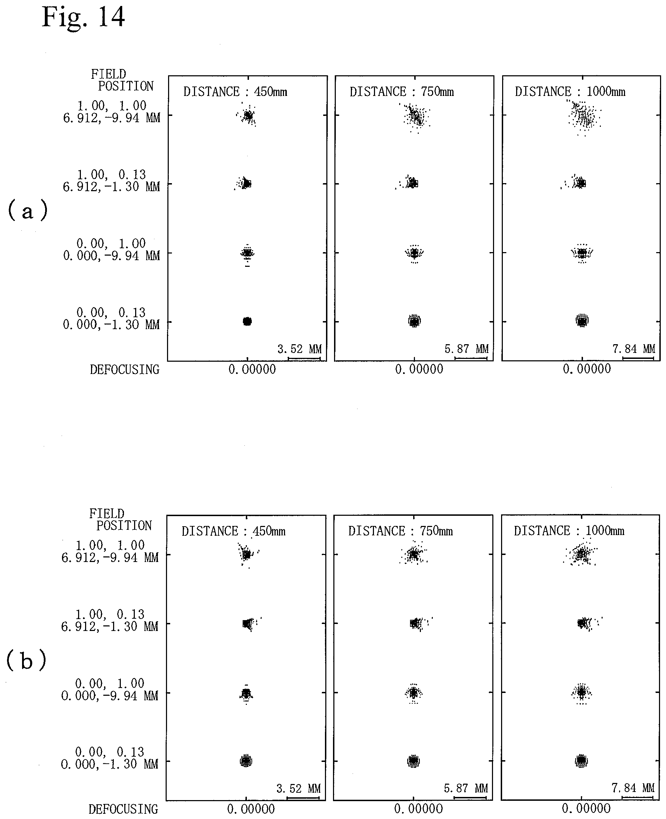

FIG. 14 depicts the convergence state of dots in an image formed on the screen 9. FIG. 14(a) depicts states where the near distance region 55 and the shared region 57 are used, the distance between the screen 9 and the mirror M1 is set at the near distance (450mm), the middle distance (750mm), and the far distance (1000mm), and the focus is adjusted by moving the lenses L21 and L22 forward and backward using the first focusing unit 51. FIG. 14(b) depicts states where the middle/far distance region 56 and the shared region 57 are used, the distance between the screen 9 and the mirror M1 is set at the near distance, the middle distance, and the far distance, and the focus of the lenses L21 and L22 is adjusted by the first focusing unit 51.

As can be understood by comparing the drawings, the focusing performance at middle and long distances is improved by using the middle/far distance region 56 and the shared region 57 and the focusing performance at the near distance is improved by using the near distance region 55 and the shared region 57.

Even for a lens, like the lens L15-2, where the light beam 6 passes so as to straddle the optical axis 7, when the light beam 6 passes the eccentric area on the surface S12, by providing different optical properties in an area (region) or areas (regions) where the light beam 6 does not pass and rotating the lens during use, it is possible to use a single lens as a lens with different optical properties. At the lens L15-2, a light beam with a large elevation angle (that is, a wide-angle beam), where a difference in distance will cause a difference in the focusing performance, will pass through a peripheral part of the surface S12 that is distant from the optical axis 7. Accordingly, by disposing the near distance region 55 and the middle/far distance region 56 in the peripheral parts (off-centered parts) of the surface S12, disposing the shared region 57 on about the optical axis 7 where differences in focusing performance do not tend to occur, and rotating the lens L15-2 by 180°, the focusing performance at near and far distances is improved. By also making the surface S12 a free-form surface where the regions 55, 57, and 56 are continuous surfaces without boundaries, it is possible to prevent any influence of light passing through regions with different characteristics from appearing in the images projected onto the screen.

In this optical system 1a, it is also possible to provide a near distance region 55 and a middle/far distance region 56 on the lens L15-2 that differs to the lenses L21 and L22 which move along the optical axis 7 for focusing purposes, and to switch between near and far by rotating the lens L15-2. Accordingly, it is possible to separate the mechanism (first focusing unit) 51 that moves the lenses along the optical axis 7 and the mechanism (second focusing unit) 52 which rotates the lenses with the optical axis 7 as the axis of rotation, which makes it possible to simplify the configuration of the optical system 1a. Also, by dividing the lens L15 into the reduction-side lens L15-1 and the magnification-side lens L15-2 that has the aspherical surface S12, and rotating only the lens L15-2, it is possible to simplify the load and configuration of the second focusing unit 52 that rotationally drives the lenses. Also, since the surface (the other surface) of the lens L15-2 on the opposite side to the surface S12 with the plurality of regions 55, 56, and 57 is a flat surface, the lens L15-2 is easy to manufacture.

Note that like the optical system 1, by providing the different regions 55 and 56 for near and far on the lens L21 and rotating the lens L15-2 and the lens L21 in synchronization, it is possible to further improve the focusing performance at the near distance and the focusing performance at the middle and far distances.

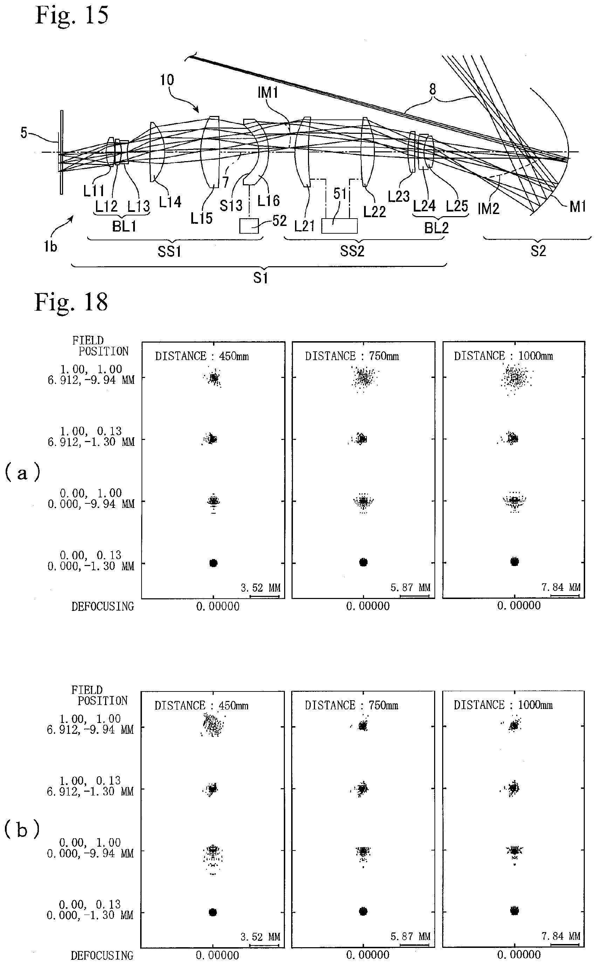

FIG. 15 depicts yet another example of an optical system. The fundamental configuration of this optical system 1b is the same as the optical system 1 described above. This optical system 1b includes a first focusing unit 51 that moves the lenses L21 and L22 of the second subsystem SS2 along the optical axis 7 for focusing purposes and a second focusing unit 52 for rotating the lens L16 of the first subsystem SS1 around the optical axis (or "center axis") 7 as the axis of rotation to switch between the near distance region and the middle/far distance region. The lens L21 of the second subsystem SS2 of the optical system 1b is not rotationally driven and the surfaces S15 and S16 on both sides are fixed at the near-distance aspherical surface A of the optical system 1.

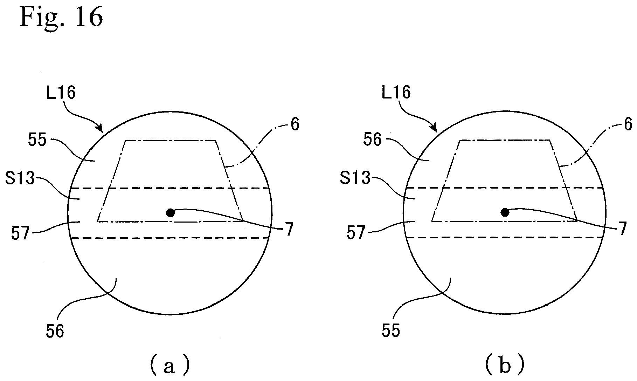

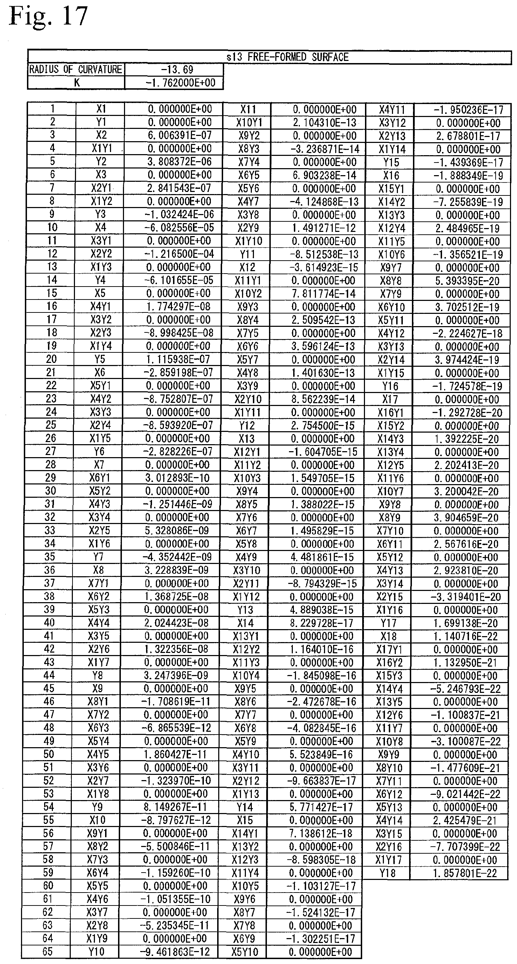

Aside from the surfaces S15 and S16 on both sides of the lens L21 being fixed at the near-distance aspherical surface A and the surface S13 on the reduction side of the lens L16 being a free-formed surface including regions with three different functions as depicted in FIG. 16, the lens data of the optical system 1b is the same as the optical system 1. FIG. 17 depicts the free-formed surface coefficients of the surface S13.

As depicted in FIG. 15, the lens L16 is a lens disposed closest to the magnification side in the first subsystem SS1 and is the lens that is adjacent to the reduction side of the first intermediate image IM1. The first intermediate image IM1 is formed on an upper side of the optical axis 7. This means that as depicted in FIGS. 16(a) and 16(b), at the lens L16, the light beam 6 passes through an area that includes (i.e., straddles) the optical axis 7 but is eccentrically shifted (off-center) to the upper side of the surface S13. The surface S13 includes a shared region 57 that includes the optical axis 7 and is commonly used for near distance and far distance, a near distance region 55 disposed on the outside of the shared region 57, and a middle/far distance region 56 disposed on the opposite side of the shared region 57 to the near distance region 55. When the lens L16 is rotated to set the near distance region 55 on the upper side, the light beam 6 passes through the near distance region 55 and the shared region 57. When the lens L16 is rotated by 180° to set the middle/far distance region 56 on the upper side, the light beam 6 passes through the middle/far distance region 56 and the shared region 57.

FIG. 18 depicts the convergence state of the dots in the image formed on the screen 9. FIG. 18(a) depicts states where the near distance region 55 and the shared region 57 are used, the distance between the screen 9 and the mirror M1 is set at the near distance (450mm), the middle distance (750mm), and the far distance (1000mm), and the focus is adjusted by moving the lenses L21 and L22 forward and backward using the first focusing unit 51. FIG. 18(b) depicts states where the middle/far distance region 56 and the shared region 57 are used, the distance between the screen 9 and the mirror M1 is set at the near distance, the middle distance, and the far distance, and the focus of the lenses L21 and L22 is adjusted using the first focusing unit 51.

As can be understood by comparing the drawings, the focusing performance at the middle distance and the far distance is greatly improved by using the middle/far distance region 56 and the shared region 57, and the focusing performance at the near distance is greatly improved by using the near distance region 55 and the shared region 57.

Although the light beam 6 passes an eccentric area (part, region) that includes (straddles) the optical axis 7 at the lens L16 in the same way as with the lens L15, compared to the lens L15, the light beam 6 passes a further eccentrically shifted (off-center) area at the lens L16. This means that it is possible to provide a wider area for the near distance region 55 and the middle/far distance region 56 respectively compared to the area of the shared region 57 that includes the optical axis 7, which makes it possible to correct aberrations more suitably in order to focus at the respective distances. The lens L16 is a lens that does not move forward and backward along the optical axis 7 during focusing, which makes it possible to simplify the mechanism (the second focusing unit) 52 that rotates to switch between near and far.

In order to provide a plurality of regions with different optical functions on a single lens, it is desirable for the ratio of the area SA1 where the light beam passes eccentrically out to the area SA0 of one surface of the lens to satisfy the following condition (1). Note that the expression "the area through which the light beam passes eccentrically" refers to the area of the light beam on the surface that is incident on that surface of the lens when the light beam passes through that surface, that is one side of a lens, in a state eccentrically or off-center with respect to the optical axis.

$$0.25 \leq SA1/SA0 \leq 0.7 \quad \ldots (1)$$

When the ratio is below 0.25, there is a significant fall in the efficiency with which the lens is used. When the ratio is over 0.7, the area provided with different optical characteristics is too small and it is difficult to provide a difference in the performance for correcting the light beam 6. It is more desirable for the lower limit of the condition to be 0.3 and more desirable for the upper limit of the condition to be 0.6, with 0.5 being even more preferable.

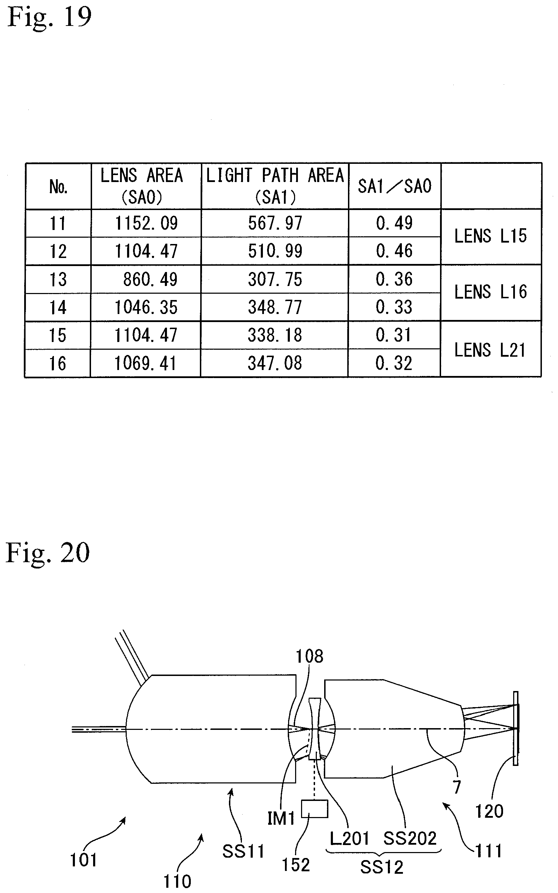

FIG. 19 depicts the lens area (SA0), the optical path area (SA1), and the ratio (SA1/SA0) of each surface of the lenses L15, L16 and L21. The lens L21 is the lens that is rotated around the optical axis 7 as the axis of rotation in the optical system 1 depicted in FIG. 1, the lens L15 is the lens that is rotated around the optical axis 7 as the axis of rotation in the optical system 1a depicted in FIG. 10, and the lens L16 is a lens that corresponds to a lens that is rotated around the optical axis 7 as the axis of rotation in the optical system 1b depicted in FIG. 15. For all of these lenses, the ratio of the optical path area (SA1) to the lens area (SA0) satisfies Condition (1) given above.

FIG. 20 depicts the overall configuration of one example of an image pickup apparatus including one example of the optical system according to the present invention. An example of an image pickup apparatus is a camera, which may be a general-purpose camera, or a camera dedicated to a special purpose, such as a security camera, a camera for motion picture photography. In addition, the image pickup apparatus may be incorporated in a security system, an alarm system, an information processing apparatus, a mobile terminal, or the like, or an apparatus that may incorporate those functions. This image pickup apparatus 101 includes an optical system 110 for image pickup and a unit (image pickup unit) 120 which is disposed on the reduction side and picks up images formed by an image forming optical system 111 included in the optical system 110. One example of the image pickup unit 120 is a unit including an image pickup element such as a CCD, a CMOS, or the like. The image capturing unit (image pickup unit) 120 is not limited to visible light, and may be any device capable of image pickup using near-infrared light, infrared light, or the like.

The image forming optical system 111 includes a first subsystem SS11 that has one or a plurality of lenses and forms light that is incident from the magnification side (object side) on the reduction side (image pickup side) into the first intermediate image IM1, and a second subsystem SS12 that has one or a plurality of lenses and forms the first intermediate image IM1 into a final image on the image pickup unit 120 on the reduction side. The first subsystem SS1 and the second subsystem SS12 may include a reflective surface that has no refractive power or is provided with refractive power. One example of an image pickup lens system that forms an intermediate image is disclosed in Japanese Laid-open Patent Publication No. 2015-179270.

The second subsystem SS12 in the present embodiment includes a lens L201, which is disposed on a side of the first intermediate image IM1 and is rotationally driven around the optical axis 7 by the focusing unit 152 during focusing, and a lens group SS202 on the image pickup side that is disposed on the reduction side (image pickup side) of the lens L201. The optical group (lens group) SS02 on the image pickup side includes one or a plurality of lenses and may include a plurality of lenses along the optical axis 7 for variable magnification (zooming). The lens L201 is a focus adjusting lens.

The lens L201 is a lens disposed closest to the magnification side of the second subsystem SS12 and is disposed adjacent to the intermediate image IM1 formed by the first subsystem SS1 on the reduction side of the first intermediate image IM1. It is possible to form the first intermediate image IM1 on one side of the optical axis 7. As one example, the image pickup apparatus may be an apparatus that picks up an image of an up or down part of an area (an image, surface, or object) for pick-up a wider image angle, with respect to the optical axis 7 on the magnification side (object side). In this apparatus, the intermediate image IM1 may be formed on only one side of the optical axis 7, for example, the lower side. In this case, the first intermediate image IM1 does not straddle the optical axis 7 and is formed at a position that is off-center with respect to the optical axis 7. Accordingly, a light beam 108 for forming an image on the reduction side may not straddle the optical axis 7 at both surfaces of the lens L201, or may straddle the optical axis 7 with passing through off-center or eccentrically with respect to the optical axis 7. This means that in the same way as the lens L21 of the optical system 1 described earlier, by rotating the lens L201 using the focusing unit 152 that is a driving unit, it is possible to set the light beam so as to pass through different regions on both surfaces of the lens L201.

As one example, when the lens group SS202 on the image pickup side includes a zoom function, one region of the lens L201 can be used as a region that obtains an optimal focus for image pickup at the telephoto end and another region of the lens L201 can be used as a region that obtains an optimal focus for image pickup at the wide-angle end. Also, when the optical system 110 is for a security camera, one region of the lens L201 can be used as a region that obtains an optimal focus for image pickup of images of visible light and another region of the lens L201 can be used as a region that obtains an optimal focus for image pickup of images including near infrared light or visible light and near infrared light.

The optical system disclosed above is an example of an optical system including a lens designed so that light is incident or emitted at an angle with respect to the optical axis, and the optical system may be an optical system that does not include a mirror or an optical system that does not include an intermediate image. The present invention may be applied to an optical system designed so that a light beam (optical path) that passes through the interior of the optical system passes a position that is eccentrical (off-center position, offset position) with respect to the optical axis, and the number of lenses constructing the optical system may be one. For optical systems including a plurality of lenses, and in particular for wide-angle lens systems, an asymmetric arrangement (construction) called "retrofocus" is often used. Mirrors are often used in ultra-short focus optical systems, which tend to have large asymmetry. There are many optical systems where a display (image unit) that serves as a light valve that is offset with respect to the optical axis 7 so that light is obliquely incident on the lens. For an optical system for a projector that performs trapezoidal correction, the light beam passing through the optical system has a trapezoidal shape or a part that is close to trapezoidal in shape, which makes it easy to apply the present invention.

For a lens disposed at a position in such optical systems where a light beam passes at an off-center or eccentric position, only a part of the lens will be used for forming an image and the other part (or other area) will not be used for forming an image. By providing a plurality of regions with different optical characteristics in the part of the lens not used for image formation and rotating the lens, it is possible to switch the optical characteristics of the off-center or eccentric area through which the light beam passes. In the above description, from the view point of focusing, a single lens with two regions with different image resolving performance (SPOT DIAGRAM MTF) is provided, that is the single lens includes a region where imaging performance at a near distance is given priority and a region where imaging performance at middle and far distances is given priority. It is also possible however to provide a lens that includes a region for near and middle distances and a region for far distances, or a lens that includes three regions for near distances, middle distances, and far distances to switch respectively. Although the characteristics of the lens are switched in the example described above to expand the range where focusing is possible, it is also possible to switch the characteristics of the lens to reduce the movement distance of the lenses that move along the optical axis, to suppress the number of lenses that move, or to increase the design freedom for the focus cam.

By providing a lens with regions with different optical performance and switching between the regions, it is possible to change the wavelength characteristics of a single lens. As one example, in an optical system for security applications, one or a plurality of lenses in the system may be divided into a region where priority is given to aberration correction of visible light and a region where priority is given to aberration correction of near-infrared light, with these regions being switched during use. A lens including a plurality of regions with optical characteristics for suppressing variations in distance due to distortions in the shape of the screen may also be provided.

The number of lenses with a plurality of different optical characteristics included in one optical system is not limited to one and may be a plurality of lenses, and the position in the optical system may be closest to the magnification side, closest to the reduction side, or any intermediate position. As one example, it is possible to provide a plurality of regions with different characteristics on a lens closest to the magnification side (i.e., closest to the screen) in a lens system of a wide-angle projection optical system to change the focal distance and/or change the size of the projected image. In addition, by rotating a plurality of lenses that each have a plurality of regions with different optical characteristics in accordance with the application or the like, it is possible to provide an optical system where a variety of optical characteristics are provided by a single optical system. Such optical system may be an optical system with wide applicability, may be an optical system for which specific optical performance under specific conditions is required, or may be an optical system where it is possible for the user to control the optical performance or characteristics in response to the demands of an application.

## Claims

**1.** An optical system having at least one lens,
wherein the at least one lens comprises a first lens, through an eccentric part of the first lens with respect to an optical axis, a light beam for forming an image passing eccentrically with respect to the optical axis, and
at least one surface of the first lens includes a plurality of regions with different optical characteristics that are switched by rotating the first lens about the optical axis as an axis of rotation.

**2.** The optical system according to claim 1,
comprising a plurality of lenses disposed along a common optical axis and the plurality of lenses include the first lens.

**3.** The optical system according to claim 1 or 2,
wherein the plurality of regions include a first region for forming an image at a near distance and a second region for forming an image at a far distance.

**4.** The optical system according to claim 3,
comprising at least one focus adjusting lens that moves along the optical axis to adjust focus and that includes the first lens.

**5.** The optical system according to claim 3,
wherein the first lens is a lens that does not move along the optical axis to adjust focus.

**6.** The optical system according to any one of claims 1 to 5,
wherein the at least one surface includes regions that are rotationally asymmetric.

**7.** The optical system according to any one of claims 1 to 6,
wherein the plurality of regions include aspherical surfaces with a same radius of curvature.

**8.** The optical system according to any one of claims 1 to 6, wherein the at least one surface includes a free-formed surface.

**9.** The optical system according to any one of claims 1 to 8, wherein the plurality of regions are regions that do not straddle the optical axis.

**10.** The optical system according to any one of claims 1 to 8, wherein the at least one surface includes a shared region that straddles the optical axis and is passed by the light beam together with any one of the plurality of regions.

**11.** The optical system according to any one of claims 1 to 10, wherein the at least one surface includes a third region that is located about the optical axis and commonly used for forming an image at a near distance and at a far distance.

**12.** The optical system according to any one of claims 1 to 11, wherein a ratio to an area SA0 of the at least one surface, of an area SA1 of a part of the surface through which the light beam passes eccentrically satisfies the following condition.

$$0.25 \leq SA1/SA0 \leq 0.7$$

**13.** The optical system according to any one of claims 1 to 12, wherein another surface of the first lens is flat.

**14.** The optical system according to claim 2, wherein the plurality of lenses include a first subsystem that forms a first intermediate image.

**15.** The optical system according to claim 14, wherein the plurality of lenses include a second subsystem that forms the first intermediate image into a second intermediate image, and
the optical system further comprises a second optical system that forms the second intermediate image into a final image.

**16.** The optical system according to any one of claims 1 to 15, further comprising a driving unit that rotationally drives the first lens.

**17.** A projector comprising:

the optical system according to any one of claims 1 to 16; and
an image unit that outputs an image to be projected by the optical system.

**18.** An image pickup apparatus comprising:

the optical system according to any one of claims 1 to 16; and
a unit that picks up an image formed by the optical system.

Fig. 1

100
10
IM1
8
9
5
S16
7
L11
L12 L13
BL1
L14
L15
L16
S15
52
51
L21
L22
L23
L24 L25
BL2
IM2
M1
1
SS1
SS2
S1
S2

Fig. 2

L21
6
S15
S16
55
7
56
L21
6
S15
S16
56
7
55

(a)

(b)

# Fig. 3

| No | RADIUS OF CURVATURE (ri) | DISTANCE (di) | EFFECTIVE DIAMETER (Hi) | GLASS | nd | vd | |
|---|---|---|---|---|---|---|---|
| 0 | FLAT | 0.00 | | | | | LCD5 |
| 1 | FLAT | 1.15 | | | | | |
| 2 | FLAT | 1.05 | 30.00 | SFSL5 | 1.48749 | 70.2 | GLASS PLATE G1 |
| 3 | FLAT | 22.30 | 30.00 | | | | |
| 4 | 17.57 | 4.30 | 13.60 | SLAL8 | 1.71300 | 53.9 | LENS L11 |
| 5 | -36.87 | 0.15 | 12.20 | | | | |
| 6 | 72.30 | 3.20 | 11.60 | SBAL35 | 1.58913 | 61.1 | LENS L12 |
| 7 | -17.76 | 3.00 | 10.50 | STIH53 | 1.84666 | 23.8 | LENS L13 |
| 8 | 19.71 | 11.35 | 9.20 | | | | |
| 9 | 329.22 | 7.50 | 25.90 | STIM8 | 1.59551 | 39.2 | LENS L14 |
| 10 | -22.11 | 18.20 | 28.00 | | | | |
| 11 | 37.31 | 9.60 | 38.30 | SBSM14 | 1.60311 | 60.6 | LENS L15 |
| 12 | -316.20 | 20.26 | 37.50 | | | | |
| 13 | -13.69 | 5.00 | 33.10 | E48R | 1.53113 | 55.8 | LENS L16 |
| 14 | -27.27 | 13.29 | 36.50 | | | | |
| 15 | 37.62 | 7.00 | 37.50 | E48R | 1.53113 | 55.8 | LENS L21 |
| 16 | 211.62 | 26.73 | 36.90 | | | | |
| 17 | 134.85 | 6.90 | 32.80 | SNBH5 | 1.65412 | 39.7 | LENS L22 |
| 18 | -40.21 | 17.05 | 32.50 | | | | |
| 19 | 37.79 | 3.40 | 19.30 | SLAH65 | 1.80400 | 46.6 | LENS L23 |
| 20 | 232.83 | 1.74 | 18.20 | | | | |
| 21 | 72.46 | 3.00 | 16.70 | TAFD25 | 1.90366 | 31.3 | LENS L24 |
| 22 | 16.70 | 5.10 | 14.60 | SFSL5 | 1.48749 | 70.2353 | LENS L25 |
| 23 | -31.42 | 68.73 | 13.50 | | | | |
| 24 | -24.54 | -450.00 | 68.00 | | | | MIRROR M1 |
| 26 | FLAT | 0.00 | | | | | SCREEN 9 |

Fig. 4

| | s6 ASPHERICAL | s13 ASPHERICAL | s14 ASPHERICAL | s24 ASPHERICAL |
|---|---|---|---|---|
| RDY | 72.300 | -13.690 | -27.270 | -24.540 |
| K | 0.000000E+00 | -1.762000E+00 | -1.454000E+01 | -1.771000E+00 |
| AR3 | 0 | 0 | 0 | 4.343243E-06 |
| AR4 | -8.056600E-05 | -6.071000E-05 | -7.143000E-05 | -2.233930E-06 |
| AR5 | 0 | 0 | 0 | 0 |
| AR6 | -5.268000E-07 | -2.924000E-07 | -6.274000E-08 | -1.823006E-09 |
| AR7 | 0 | 0 | 0 | 0 |
| AR8 | 2.606000E-08 | 3.413000E-09 | 6.911000E-10 | 2.326373E-12 |
| AR9 | 0 | 0 | 0 | 0 |
| AR10 | -8.062000E-10 | -1.154000E-11 | -8.185000E-13 | -1.469941E-15 |
| AR11 | 0 | 0 | 0 | 0 |
| AR12 | 9.569000E-12 | 1.841000E-14 | -6.027000E-16 | 4.010883E-19 |
| AR13 | 0 | 0 | 0 | 0 |
| AR14 | 0.000000E+00 | -1.174000E-17 | 1.338000E-18 | 0 |

Fig. 5

| | s15 ASPHERICAL A (55) | s15 ASPHERICAL B (56) | s16 ASPHERICAL A (55) | s16 ASPHERICAL B (56) |
|---|---|---|---|---|
| RDY | 37.620 | 37.620 | 211.620 | 211.620 |
| K | 0.000000E+00 | 0.000000E+00 | 0.000000E+00 | 0.000000E+00 |
| AR3 | 0 | 0 | 0 | 0 |
| AR4 | -1.861003E-05 | -1.861003E-05 | 1.319330E-06 | 1.319330E-06 |
| AR5 | 0 | 0 | 0 | 0 |
| AR6 | 5.026887E-07 | 5.026887E-07 | 2.066930E-07 | 2.066930E-07 |
| AR7 | 0 | 0 | 0 | 0 |
| AR8 | -3.847400E-09 | -3.783382E-09 | -1.829053E-09 | -1.804113E-09 |
| AR9 | 0 | 0 | 0 | 0 |
| AR10 | 1.396961E-11 | 1.337344E-11 | 7.035831E-12 | 6.529554E-12 |
| AR11 | 0 | 0 | 0 | 0 |
| AR12 | -2.491461E-14 | -2.371387E-14 | -1.306568E-14 | -1.143916E-14 |
| AR13 | 0 | 0 | 0 | 0 |
| AR14 | 1.745546E-17 | 1.703941E-17 | 9.427141E-18 | 7.993527E-18 |

Fig. 6

| Focus | s14 | s16 | s18 | s24 |
|---|---|---|---|---|
| NEAR DISTANCE | 13.29 | 26.73 | 17.05 | -450 |
| MIDDLE DISTANCE | 12.15 | 27.85 | 17.07 | -750 |
| FAR DISTANCE | 11.75 | 28.23 | 17.09 | -1000 |

Fig. 7

(a)

FIELD POSITION
1.00, 1.00
6.912, -9.94 MM
1.00, 0.13
6.912, -1.30 MM
0.00, 1.00
0.000, -9.94 MM
0.00, 0.13
0.000, -1.30 MM
DEFOCUSING
DISTANCE : 450mm
3.52 MM
0.00000
DISTANCE : 750mm
5.87 MM
0.00000
DISTANCE : 1000mm
7.84 MM
0.00000

(b)

FIELD POSITION
1.00, 1.00
6.912, -9.94 MM
1.00, 0.13
6.912, -1.30 MM
0.00, 1.00
0.000, -9.94 MM
0.00, 0.13
0.000, -1.30 MM
DEFOCUSING
DISTANCE : 450mm
3.52 MM
0.00000
DISTANCE : 750mm
5.87 MM
0.00000
DISTANCE : 1000mm
7.84 MM
0.00000

# Fig. 8

| s15 FREE-FORMED SURFACE | |
|---|---|
| RADIUS OF CURVATURE | 37.410167 |
| K | 0.000000E+00 |

| | | | | | | |
|---|---|---|---|---|---|---|
| 1 | X1 | 0.000000E+00 | X11 | 0.000000E+00 | X4Y11 | -9.168871E-19 |
| 2 | Y1 | 0.000000E+00 | X10Y1 | -5.628591E-14 | X3Y12 | 0.000000E+00 |
| 3 | X2 | -7.591438E-05 | X9Y2 | 0.000000E+00 | X2Y13 | -3.388084E-19 |
| 4 | X1Y1 | 0.000000E+00 | X8Y3 | -1.614935E-13 | X1Y14 | 0.000000E+00 |
| 5 | Y2 | -7.211922E-05 | X7Y4 | 0.000000E+00 | Y15 | 7.037216E-19 |
| 6 | X3 | 0.000000E+00 | X6Y5 | 1.544292E-13 | X16 | 1.908047E-19 |
| 7 | X2Y1 | -6.159626E-07 | X5Y6 | 0.000000E+00 | X15Y1 | 0.000000E+00 |
| 8 | X1Y2 | 0.000000E+00 | X4Y7 | 3.241522E-13 | X14Y2 | 3.733298E-19 |
| 9 | Y3 | 4.476121E-07 | X3Y8 | 0.000000E+00 | X13Y3 | 0.000000E+00 |
| 10 | X4 | -1.851154E-05 | X2Y9 | -1.049057E-13 | X12Y4 | 7.453976E-19 |
| 11 | X3Y1 | 0.000000E+00 | X1Y10 | 0.000000E+00 | X11Y5 | 0.000000E+00 |
| 12 | X2Y2 | -3.721232E-05 | Y11 | 9.922316E-14 | X10Y6 | 1.692027E-19 |
| 13 | X1Y3 | 0.000000E+00 | X12 | -1.152919E-14 | X9Y7 | 0.000000E+00 |
| 14 | Y4 | -1.893393E-05 | X11Y1 | 0.000000E+00 | X8Y8 | 1.139474E-19 |
| 15 | X5 | 0.000000E+00 | X10Y2 | -1.128342E-13 | X7Y9 | 0.000000E+00 |
| 16 | X4Y1 | 3.893295E-08 | X9Y3 | 0.000000E+00 | X6Y10 | -1.204102E-18 |
| 17 | X3Y2 | 0.000000E+00 | X8Y4 | -3.302602E-13 | X5Y11 | 0.000000E+00 |
| 18 | X2Y3 | 4.153584E-08 | X7Y5 | 0.000000E+00 | X4Y12 | 4.351095E-19 |
| 19 | X1Y4 | 0.000000E+00 | X6Y6 | -5.261143E-13 | X3Y13 | 0.000000E+00 |
| 20 | Y5 | -3.115827E-08 | X5Y7 | 0.000000E+00 | X2Y14 | 1.028504E-20 |
| 21 | X6 | 4.959369E-07 | X4Y8 | -3.850161E-13 | X1Y15 | 0.000000E+00 |
| 22 | X5Y1 | 0.000000E+00 | X3Y9 | 0.000000E+00 | Y16 | -7.449532E-20 |
| 23 | X4Y2 | 1.509553E-06 | X2Y10 | -1.233177E-13 | X17 | 0.000000E+00 |
| 24 | X3Y3 | 0.000000E+00 | X1Y11 | 0.000000E+00 | X16Y1 | -1.429161E-22 |
| 25 | X2Y4 | 1.500028E-06 | Y12 | -3.767332E-14 | X15Y2 | 0.000000E+00 |
| 26 | X1Y5 | 0.000000E+00 | X13 | 0.000000E+00 | X14Y3 | 5.679554E-21 |
| 27 | Y6 | 5.142141E-07 | X12Y1 | 3.076486E-16 | X13Y4 | 0.000000E+00 |
| 28 | X7 | 0.000000E+00 | X11Y2 | 0.000000E+00 | X12Y5 | 3.262653E-21 |
| 29 | X6Y1 | -1.901713E-09 | X10Y3 | 5.671683E-16 | X11Y6 | 0.000000E+00 |
| 30 | X5Y2 | 0.000000E+00 | X9Y4 | 0.000000E+00 | X10Y7 | -1.736656E-21 |
| 31 | X4Y3 | -7.110720E-10 | X8Y5 | 6.265792E-16 | X9Y8 | 0.000000E+00 |
| 32 | X3Y4 | 0.000000E+00 | X7Y6 | 0.000000E+00 | X8Y9 | 4.204655E-21 |
| 33 | X2Y5 | -2.139877E-09 | X6Y7 | -2.517219E-15 | X7Y10 | 0.000000E+00 |
| 34 | X1Y6 | 0.000000E+00 | X5Y8 | 0.000000E+00 | X6Y11 | -1.305224E-20 |
| 35 | Y7 | 7.013022E-10 | X4Y9 | -9.277446E-16 | X5Y12 | 0.000000E+00 |
| 36 | X8 | -3.687664E-09 | X3Y10 | 0.000000E+00 | X4Y13 | 3.976546E-21 |
| 37 | X7Y1 | 0.000000E+00 | X2Y11 | 2.968062E-16 | X3Y14 | 0.000000E+00 |
| 38 | X6Y2 | -1.501706E-08 | X1Y12 | 0.000000E+00 | X2Y15 | -2.539053E-22 |
| 39 | X5Y3 | 0.000000E+00 | Y13 | -3.770227E-16 | X1Y16 | 0.000000E+00 |
| 40 | X4Y4 | -2.321542E-08 | X14 | -4.744264E-17 | Y17 | -5.413825E-22 |
| 41 | X3Y5 | 0.000000E+00 | X13Y1 | 0.000000E+00 | X18 | -2.512511E-22 |
| 42 | X2Y6 | -1.497827E-08 | X12Y2 | -4.065932E-17 | X17Y1 | 0.000000E+00 |
| 43 | X1Y7 | 0.000000E+00 | X11Y3 | 0.000000E+00 | X16Y2 | -3.064484E-22 |
| 44 | Y8 | -4.037709E-09 | X10Y4 | 1.710176E-16 | X15Y3 | 0.000000E+00 |
| 45 | X9 | 0.000000E+00 | X9Y5 | 0.000000E+00 | X14Y4 | -1.032542E-21 |
| 46 | X8Y1 | 1.485495E-11 | X8Y6 | 5.127046E-16 | X13Y5 | 0.000000E+00 |
| 47 | X7Y2 | 0.000000E+00 | X7Y7 | 0.000000E+00 | X12Y6 | -5.673640E-22 |
| 48 | X6Y3 | 2.783843E-11 | X6Y8 | 9.589740E-16 | X11Y7 | 0.000000E+00 |
| 49 | X5Y4 | 0.000000E+00 | X5Y9 | 0.000000E+00 | X10Y8 | 2.283969E-22 |
| 50 | X4Y5 | -1.848391E-11 | X4Y10 | 3.204998E-16 | X9Y9 | 0.000000E+00 |
| 51 | X3Y6 | 0.000000E+00 | X3Y11 | 0.000000E+00 | X8Y10 | -1.124402E-22 |
| 52 | X2Y7 | 2.458231E-11 | X2Y12 | 6.733453E-17 | X7Y11 | 0.000000E+00 |
| 53 | X1Y8 | 0.000000E+00 | X1Y13 | 0.000000E+00 | X6Y12 | 1.458171E-21 |
| 54 | Y9 | -1.193747E-11 | Y14 | 6.096165E-17 | X5Y13 | 0.000000E+00 |
| 55 | X10 | 1.210182E-11 | X15 | 0.000000E+00 | X4Y14 | -7.194728E-22 |
| 56 | X9Y1 | 0.000000E+00 | X14Y1 | -5.763144E-19 | X3Y15 | 0.000000E+00 |
| 57 | X8Y2 | 6.417568E-11 | X13Y2 | 0.000000E+00 | X2Y16 | 9.065272E-23 |
| 58 | X7Y3 | 0.000000E+00 | X12Y3 | -3.613656E-18 | X1Y17 | 0.000000E+00 |
| 59 | X6Y4 | 1.366074E-10 | X11Y4 | 0.000000E+00 | Y18 | 5.101412E-23 |
| 60 | X5Y5 | 0.000000E+00 | X10Y5 | -2.384063E-19 | | |
| 61 | X4Y6 | 1.416773E-10 | X9Y6 | 0.000000E+00 | | |
| 62 | X3Y7 | 0.000000E+00 | X8Y7 | -2.690928E-18 | | |
| 63 | X2Y8 | 6.452634E-11 | X7Y8 | 0.000000E+00 | | |
| 64 | X1Y9 | 0.000000E+00 | X6Y9 | 9.545899E-18 | | |
| 65 | Y10 | 1.596587E-11 | X5Y10 | 0.000000E+00 | | |

# Fig. 9

| s16 FREE-FORMED SURFACE | |
|---|---|
| RADIUS OF CURVATURE | 199.351015 |
| K | 0.000000E+00 |

| | | | | | | |
|---|---|---|---|---|---|---|
| 1 | X1 | 0.000000E+00 | X11 | 0.000000E+00 | X4Y11 | -1.356484E-17 |
| 2 | Y1 | 0.000000E+00 | X10Y1 | 2.030931E-14 | X3Y12 | 0.000000E+00 |
| 3 | X2 | -1.492672E-04 | X9Y2 | 0.000000E+00 | X2Y13 | 1.307060E-17 |
| 4 | X1Y1 | 0.000000E+00 | X8Y3 | -6.210446E-14 | X1Y14 | 0.000000E+00 |
| 5 | Y2 | -1.458247E-04 | X7Y4 | 0.000000E+00 | Y15 | -2.744590E-18 |
| 6 | X3 | 0.000000E+00 | X6Y5 | 1.871268E-13 | X16 | 3.452639E-20 |
| 7 | X2Y1 | -4.753609E-07 | X5Y6 | 0.000000E+00 | X15Y1 | 0.000000E+00 |
| 8 | X1Y2 | 0.000000E+00 | X4Y7 | -5.917777E-13 | X14Y2 | 1.942816E-18 |
| 9 | Y3 | 1.066356E-07 | X3Y8 | 0.000000E+00 | X13Y3 | 0.000000E+00 |
| 10 | X4 | 1.442444E-06 | X2Y9 | 7.932390E-13 | X12Y4 | -5.793547E-19 |
| 11 | X3Y1 | 0.000000E+00 | X1Y10 | 0.000000E+00 | X11Y5 | 0.000000E+00 |
| 12 | X2Y2 | 3.947279E-06 | Y11 | -2.183505E-13 | X10Y6 | 2.328074E-19 |
| 13 | X1Y3 | 0.000000E+00 | X12 | 4.045514E-15 | X9Y7 | 0.000000E+00 |
| 14 | Y4 | 1.169284E-06 | X11Y1 | 0.000000E+00 | X8Y8 | 2.465528E-18 |
| 15 | X5 | 0.000000E+00 | X10Y2 | -2.316462E-14 | X7Y9 | 0.000000E+00 |
| 16 | X4Y1 | 2.798610E-08 | X9Y3 | 0.000000E+00 | X6Y10 | 1.060753E-18 |
| 17 | X3Y2 | 0.000000E+00 | X8Y4 | -1.494156E-13 | X5Y11 | 0.000000E+00 |
| 18 | X2Y3 | -6.353343E-09 | X7Y5 | 0.000000E+00 | X4Y12 | 3.417546E-18 |
| 19 | X1Y4 | 0.000000E+00 | X6Y6 | -1.285673E-13 | X3Y13 | 0.000000E+00 |
| 20 | Y5 | 1.871372E-08 | X5Y7 | 0.000000E+00 | X2Y14 | -2.170028E-18 |
| 21 | X6 | 2.023413E-07 | X4Y8 | 1.135530E-13 | X1Y15 | 0.000000E+00 |
| 22 | X5Y1 | 0.000000E+00 | X3Y9 | 0.000000E+00 | Y16 | 3.166582E-19 |
| 23 | X4Y2 | 5.813831E-07 | X2Y10 | -2.068477E-13 | X17 | 0.000000E+00 |
| 24 | X3Y3 | 0.000000E+00 | X1Y11 | 0.000000E+00 | X16Y1 | 8.864120E-22 |
| 25 | X2Y4 | 5.730330E-07 | Y12 | 1.051347E-14 | X15Y2 | 0.000000E+00 |
| 26 | X1Y5 | 0.000000E+00 | X13 | 0.000000E+00 | X14Y3 | -1.999676E-21 |
| 27 | Y6 | 2.112383E-07 | X12Y1 | -2.972186E-17 | X13Y4 | 0.000000E+00 |
| 28 | X7 | 0.000000E+00 | X11Y2 | 0.000000E+00 | X12Y5 | -3.285045E-21 |
| 29 | X6Y1 | -6.397140E-10 | X10Y3 | -8.191079E-16 | X11Y6 | 0.000000E+00 |
| 30 | X5Y2 | 0.000000E+00 | X9Y4 | 0.000000E+00 | X10Y7 | 4.460971E-22 |
| 31 | X4Y3 | -2.006507E-09 | X8Y5 | 6.675833E-16 | X9Y8 | 0.000000E+00 |
| 32 | X3Y4 | 0.000000E+00 | X7Y6 | 0.000000E+00 | X8Y9 | 6.420380E-21 |
| 33 | X2Y5 | 1.720671E-09 | X6Y7 | -2.772311E-15 | X7Y10 | 0.000000E+00 |
| 34 | X1Y6 | 0.000000E+00 | X5Y8 | 0.000000E+00 | X6Y11 | -1.373632E-20 |
| 35 | Y7 | -1.233395E-09 | X4Y9 | 3.924440E-15 | X5Y12 | 0.000000E+00 |
| 36 | X8 | -1.683826E-09 | X3Y10 | 0.000000E+00 | X4Y13 | 1.735686E-20 |
| 37 | X7Y1 | 0.000000E+00 | X2Y11 | -4.732638E-15 | X3Y14 | 0.000000E+00 |
| 38 | X6Y2 | -6.931946E-09 | X1Y12 | 0.000000E+00 | X2Y15 | -1.388974E-20 |
| 39 | X5Y3 | 0.000000E+00 | Y13 | 1.083796E-15 | X1Y16 | 0.000000E+00 |
| 40 | X4Y4 | -9.072626E-09 | X14 | -4.838948E-17 | Y17 | 2.734379E-21 |
| 41 | X3Y5 | 0.000000E+00 | X13Y1 | 0.000000E+00 | X18 | 1.615519E-22 |
| 42 | X2Y6 | -7.026351E-09 | X12Y2 | -3.890179E-16 | X17Y1 | 0.000000E+00 |
| 43 | X1Y7 | 0.000000E+00 | X11Y3 | 0.000000E+00 | X16Y2 | -3.178838E-21 |
| 44 | Y8 | -1.793488E-09 | X10Y4 | 3.060736E-16 | X15Y3 | 0.000000E+00 |
| 45 | X9 | 0.000000E+00 | X9Y5 | 0.000000E+00 | X14Y4 | 5.164745E-22 |
| 46 | X8Y1 | 7.075126E-12 | X8Y6 | -2.638942E-16 | X13Y5 | 0.000000E+00 |
| 47 | X7Y2 | 0.000000E+00 | X7Y7 | 0.000000E+00 | X12Y6 | 8.361613E-22 |
| 48 | X6Y3 | 1.176191E-11 | X6Y8 | -2.598282E-16 | X11Y7 | 0.000000E+00 |
| 49 | X5Y4 | 0.000000E+00 | X5Y9 | 0.000000E+00 | X10Y8 | -1.541037E-21 |
| 50 | X4Y5 | 5.628138E-11 | X4Y10 | -1.223457E-15 | X9Y9 | 0.000000E+00 |
| 51 | X3Y6 | 0.000000E+00 | X3Y11 | 0.000000E+00 | X8Y10 | -3.147542E-21 |
| 52 | X2Y7 | -5.670018E-11 | X2Y12 | 8.577517E-16 | X7Y11 | 0.000000E+00 |
| 53 | X1Y8 | 0.000000E+00 | X1Y13 | 0.000000E+00 | X6Y12 | -5.706214E-22 |
| 54 | Y9 | 2.438848E-11 | Y14 | -1.145451E-16 | X5Y13 | 0.000000E+00 |
| 55 | X10 | 4.742175E-12 | X15 | 0.000000E+00 | X4Y14 | -3.348273E-21 |
| 56 | X9Y1 | 0.000000E+00 | X14Y1 | -3.933565E-19 | X3Y15 | 0.000000E+00 |
| 57 | X8Y2 | 2.965881E-11 | X13Y2 | 0.000000E+00 | X2Y16 | 2.245460E-21 |
| 58 | X7Y3 | 0.000000E+00 | X12Y3 | 2.360529E-18 | X1Y17 | 0.000000E+00 |
| 59 | X6Y4 | 5.900341E-11 | X11Y4 | 0.000000E+00 | Y18 | -3.143889E-22 |
| 60 | X5Y5 | 0.000000E+00 | X10Y5 | 1.996046E-18 | | |
| 61 | X4Y6 | 3.433985E-11 | X9Y6 | 0.000000E+00 | | |
| 62 | X3Y7 | 0.000000E+00 | X8Y7 | -3.762298E-18 | | |
| 63 | X2Y8 | 4.229389E-11 | X7Y8 | 0.000000E+00 | | |
| 64 | X1Y9 | 0.000000E+00 | X6Y9 | 1.074782E-17 | | |
| 65 | Y10 | 4.919335E-12 | X5Y10 | 0.000000E+00 | | |

Fig. 10

10
d11-1
d11-3
d11-2
IM1
8
5
S11-2
7
S16
S11-1
S11-3
51
L11
L14
52
L16
L22
L23
L24 L25
IM2
M1
S12
L12 L13
L21
BL2
1a
BL1
L15-1
L15-2
S2
SS1
SS2
S1

Fig. 11

| No | RADIUS OF CURVATURE (ri) | DISTANCE (di) | EFFECTIVE DIAMETER (Hi) | GLASS | nd | vd | |
|---|---|---|---|---|---|---|---|
| 9 | 329.22 | 7.50 | 25.90 | STIM8 | 1.59551 | 39.2 | LENS L14 |
| 10 | -22.11 | 18.20 | 28.00 | | | | |
| 11-1 | 37.31 | 7.60 | 38.30 | SBSM14 | 1.60311 | 60.6 | LENS L15-1 |
| 11-2 | INF | 0.02 | 38.30 | | | | |
| 11-3 | INF | 2.00 | 38.30 | SBSM14 | 1.60311 | 60.6 | LENS L15-2 |
| 12 | -316.20 | 20.26 | 37.50 | | | | |
| 13 | -13.69 | 5.00 | 33.10 | E48R | 1.53113 | 55.8 | LENS L16 |
| 14 | -27.27 | 13.29 | 36.50 | | | | |
| 15 | 37.62 | 7.00 | 37.50 | E48R | 1.53113 | 55.8 | LENS L21 |
| 16 | 211.62 | 26.73 | 36.90 | | | | |

Fig. 12

L15-2
55
6
S12
57
7
56
(a)
L15-2
56
6
S12
57
7
55
(b)

# Fig. 13

| s12 FREE-FORMED SURFACE | |
|---|---|
| RADIUS OF CURVATURE | -316.2 |
| K | 0.000000E+00 |

| | | | | | | |
|---|---|---|---|---|---|---|
| 1 | X1 | 0.000000E+00 | X11 | 0.000000E+00 | X4Y11 | 5.304897E-20 |
| 2 | Y1 | 0.000000E+00 | X10Y1 | -3.635578E-15 | X3Y12 | 0.000000E+00 |
| 3 | X2 | 1.286760E-07 | X9Y2 | 0.000000E+00 | X2Y13 | -1.824843E-19 |
| 4 | X1Y1 | 0.000000E+00 | X8Y3 | -2.078804E-14 | X1Y14 | 0.000000E+00 |
| 5 | Y2 | 2.749027E-07 | X7Y4 | 0.000000E+00 | Y15 | 8.950899E-20 |
| 6 | X3 | 0.000000E+00 | X6Y5 | -3.005283E-14 | X16 | 1.146532E-21 |
| 7 | X2Y1 | -1.492513E-07 | X5Y6 | 0.000000E+00 | X15Y1 | 0.000000E+00 |
| 8 | X1Y2 | 0.000000E+00 | X4Y7 | -2.239177E-14 | X14Y2 | -1.702538E-21 |
| 9 | Y3 | 4.671154E-08 | X3Y8 | 0.000000E+00 | X13Y3 | 0.000000E+00 |
| 10 | X4 | -5.659948E-09 | X2Y9 | -3.243769E-14 | X12Y4 | 5.820356E-21 |
| 11 | X3Y1 | 0.000000E+00 | X1Y10 | 0.000000E+00 | X11Y5 | 0.000000E+00 |
| 12 | X2Y2 | -1.037507E-08 | Y11 | 1.005389E-14 | X10Y6 | 1.687263E-20 |
| 13 | X1Y3 | 0.000000E+00 | X12 | 9.047479E-17 | X9Y7 | 0.000000E+00 |
| 14 | Y4 | -2.073907E-08 | X11Y1 | 0.000000E+00 | X8Y8 | 7.563446E-21 |
| 15 | X5 | 0.000000E+00 | X10Y2 | 3.806240E-16 | X7Y9 | 0.000000E+00 |
| 16 | X4Y1 | 3.792199E-09 | X9Y3 | 0.000000E+00 | X6Y10 | 1.367571E-20 |
| 17 | X3Y2 | 0.000000E+00 | X8Y4 | 1.260023E-15 | X5Y11 | 0.000000E+00 |
| 18 | X2Y3 | 1.113105E-08 | X7Y5 | 0.000000E+00 | X4Y12 | 2.799513E-20 |
| 19 | X1Y4 | 0.000000E+00 | X6Y6 | 9.795775E-16 | X3Y13 | 0.000000E+00 |
| 20 | Y5 | -3.937116E-09 | X5Y7 | 0.000000E+00 | X2Y14 | -2.112883E-20 |
| 21 | X6 | 1.224665E-10 | X4Y8 | 3.893508E-15 | X1Y15 | 0.000000E+00 |
| 22 | X5Y1 | 0.000000E+00 | X3Y9 | 0.000000E+00 | Y16 | 1.917170E-21 |
| 23 | X4Y2 | 1.948615E-10 | X2Y10 | -2.025421E-15 | X17 | 0.000000E+00 |
| 24 | X3Y3 | 0.000000E+00 | X1Y11 | 0.000000E+00 | X16Y1 | -4.333159E-23 |
| 25 | X2Y4 | 5.803424E-10 | Y12 | 1.462724E-16 | X15Y2 | 0.000000E+00 |
| 26 | X1Y5 | 0.000000E+00 | X13 | 0.000000E+00 | X14Y3 | -8.748631E-23 |
| 27 | Y6 | 5.138384E-10 | X12Y1 | -1.832827E-18 | X13Y4 | 0.000000E+00 |
| 28 | X7 | 0.000000E+00 | X11Y2 | 0.000000E+00 | X12Y5 | -2.135871E-22 |
| 29 | X6Y1 | -7.612897E-11 | X10Y3 | 4.624847E-17 | X11Y6 | 0.000000E+00 |
| 30 | X5Y2 | 0.000000E+00 | X9Y4 | 0.000000E+00 | X10Y7 | -3.477414E-22 |
| 31 | X4Y3 | -1.581152E-10 | X8Y5 | 9.077777E-17 | X9Y8 | 0.000000E+00 |
| 32 | X3Y4 | 0.000000E+00 | X7Y6 | 0.000000E+00 | X8Y9 | -4.297192E-22 |
| 33 | X2Y5 | -3.145861E-10 | X6Y7 | 9.011095E-17 | X7Y10 | 0.000000E+00 |
| 34 | X1Y6 | 0.000000E+00 | X5Y8 | 0.000000E+00 | X6Y11 | -3.184789E-22 |
| 35 | Y7 | 1.092455E-10 | X4Y9 | 4.484374E-17 | X5Y12 | 0.000000E+00 |
| 36 | X8 | -7.136740E-13 | X3Y10 | 0.000000E+00 | X4Y13 | -1.813480E-22 |
| 37 | X7Y1 | 0.000000E+00 | X2Y11 | 1.101782E-16 | X3Y14 | 0.000000E+00 |
| 38 | X6Y2 | -9.140634E-12 | X1Y12 | 0.000000E+00 | X2Y15 | 1.194969E-22 |
| 39 | X5Y3 | 0.000000E+00 | Y13 | -4.204519E-17 | X1Y16 | 0.000000E+00 |
| 40 | X4Y4 | 7.707808E-12 | X14 | -4.554768E-19 | Y17 | -7.521017E-23 |
| 41 | X3Y5 | 0.000000E+00 | X13Y1 | 0.000000E+00 | X18 | -1.231479E-24 |
| 42 | X2Y6 | -2.041227E-11 | X12Y2 | -4.427435E-19 | X17Y1 | 0.000000E+00 |
| 43 | X1Y7 | 0.000000E+00 | X11Y3 | 0.000000E+00 | X16Y2 | 3.378923E-24 |
| 44 | Y8 | -5.331524E-12 | X10Y4 | -6.213047E-18 | X15Y3 | 0.000000E+00 |
| 45 | X9 | 0.000000E+00 | X9Y5 | 0.000000E+00 | X14Y4 | 2.819577E-24 |
| 46 | X8Y1 | 9.821234E-13 | X8Y6 | -7.136062E-18 | X13Y5 | 0.000000E+00 |
| 47 | X7Y2 | 0.000000E+00 | X7Y7 | 0.000000E+00 | X12Y6 | -8.707544E-25 |
| 48 | X6Y3 | 2.983596E-12 | X6Y8 | -6.984507E-18 | X11Y7 | 0.000000E+00 |
| 49 | X5Y4 | 0.000000E+00 | X5Y9 | 0.000000E+00 | X10Y8 | -2.007986E-24 |
| 50 | X4Y5 | 3.181219E-12 | X4Y10 | -1.615109E-17 | X9Y9 | 0.000000E+00 |
| 51 | X3Y6 | 0.000000E+00 | X3Y11 | 0.000000E+00 | X8Y10 | 1.330817E-23 |
| 52 | X2Y7 | 4.690368E-12 | X2Y12 | 9.107457E-18 | X7Y11 | 0.000000E+00 |
| 53 | X1Y8 | 0.000000E+00 | X1Y13 | 0.000000E+00 | X6Y12 | -4.526410E-24 |
| 54 | Y9 | -1.360108E-12 | Y14 | -8.572689E-19 | X5Y13 | 0.000000E+00 |
| 55 | X10 | -6.066996E-15 | X15 | 0.000000E+00 | X4Y14 | -1.580309E-23 |
| 56 | X9Y1 | 0.000000E+00 | X14Y1 | 3.110508E-20 | X3Y15 | 0.000000E+00 |
| 57 | X8Y2 | -2.991544E-14 | X13Y2 | 0.000000E+00 | X2Y16 | 1.919417E-23 |
| 58 | X7Y3 | 0.000000E+00 | X12Y3 | 8.938148E-21 | X1Y17 | 0.000000E+00 |
| 59 | X6Y4 | 2.656958E-14 | X11Y4 | 0.000000E+00 | Y18 | -1.606304E-24 |
| 60 | X5Y5 | 0.000000E+00 | X10Y5 | -1.211329E-20 | | |
| 61 | X4Y6 | -3.689228E-13 | X9Y6 | 0.000000E+00 | | |
| 62 | X3Y7 | 0.000000E+00 | X8Y7 | 1.248163E-20 | | |
| 63 | X2Y8 | 2.657561E-13 | X7Y8 | 0.000000E+00 | | |
| 64 | X1Y9 | 0.000000E+00 | X6Y9 | 3.128682E-20 | | |
| 65 | Y10 | 7.226016E-15 | X5Y10 | 0.000000E+00 | | |

Fig. 14

(a)

FIELD POSITION
1.00, 1.00
6.912, -9.94 MM
1.00, 0.13
6.912, -1.30 MM
0.00, 1.00
0.000, -9.94 MM
0.00, 0.13
0.000, -1.30 MM
DEFOCUSING
DISTANCE : 450mm
DISTANCE : 750mm
DISTANCE : 1000mm
3.52 MM
5.87 MM
7.84 MM
0.00000
0.00000
0.00000

(b)

FIELD POSITION
1.00, 1.00
6.912, -9.94 MM
1.00, 0.13
6.912, -1.30 MM
0.00, 1.00
0.000, -9.94 MM
0.00, 0.13
0.000, -1.30 MM
DEFOCUSING
DISTANCE : 450mm
DISTANCE : 750mm
DISTANCE : 1000mm
3.52 MM
5.87 MM
7.84 MM
0.00000
0.00000
0.00000

Fig. 15

10
IM1
8
5
7
L11
L12 L13
BL1
L14
L15
S13
L16
52
51
L21
L22
L23
L24 L25
BL2
IM2
M1
1b
SS1
SS2
S2
S1

Fig. 18

(a)

FIELD POSITION
1.00, 1.00
6.912, -9.94 MM
1.00, 0.13
6.912, -1.30 MM
0.00, 1.00
0.000, -9.94 MM
0.00, 0.13
0.000, -1.30 MM
DEFOCUSING
DISTANCE : 450mm
3.52 MM
0.00000
DISTANCE : 750mm
5.87 MM
0.00000
DISTANCE : 1000mm
7.84 MM
0.00000

(b)

FIELD POSITION
1.00, 1.00
6.912, -9.94 MM
1.00, 0.13
6.912, -1.30 MM
0.00, 1.00
0.000, -9.94 MM
0.00, 0.13
0.000, -1.30 MM
DEFOCUSING
DISTANCE : 450mm
3.52 MM
0.00000
DISTANCE : 750mm
5.87 MM
0.00000
DISTANCE : 1000mm
7.84 MM
0.00000

Fig. 16

L16
55
6
S13
7
57
56
(a)
L16
56
6
S13
7
57
55
(b)

# Fig. 17

| s13 FREE-FORMED SURFACE | |
|---|---|
| RADIUS OF CURVATURE | -13.69 |
| K | -1.762000E+00 |

| | | | | | | |
|---|---|---|---|---|---|---|
| 1 | X1 | 0.000000E+00 | X11 | 0.000000E+00 | X4Y11 | -1.950236E-17 |
| 2 | Y1 | 0.000000E+00 | X10Y1 | 2.104310E-13 | X3Y12 | 0.000000E+00 |
| 3 | X2 | 6.006391E-07 | X9Y2 | 0.000000E+00 | X2Y13 | 2.678801E-17 |
| 4 | X1Y1 | 0.000000E+00 | X8Y3 | -3.236871E-14 | X1Y14 | 0.000000E+00 |
| 5 | Y2 | 3.808372E-06 | X7Y4 | 0.000000E+00 | Y15 | -1.439369E-17 |
| 6 | X3 | 0.000000E+00 | X6Y5 | 6.903238E-14 | X16 | -1.888349E-19 |
| 7 | X2Y1 | 2.841543E-07 | X5Y6 | 0.000000E+00 | X15Y1 | 0.000000E+00 |
| 8 | X1Y2 | 0.000000E+00 | X4Y7 | -4.124868E-13 | X14Y2 | -7.255839E-19 |
| 9 | Y3 | -1.032424E-06 | X3Y8 | 0.000000E+00 | X13Y3 | 0.000000E+00 |
| 10 | X4 | -6.082556E-05 | X2Y9 | 1.491271E-12 | X12Y4 | 2.484965E-19 |
| 11 | X3Y1 | 0.000000E+00 | X1Y10 | 0.000000E+00 | X11Y5 | 0.000000E+00 |
| 12 | X2Y2 | -1.216500E-04 | Y11 | -8.512538E-13 | X10Y6 | -1.356521E-19 |
| 13 | X1Y3 | 0.000000E+00 | X12 | -3.614923E-15 | X9Y7 | 0.000000E+00 |
| 14 | Y4 | -6.101655E-05 | X11Y1 | 0.000000E+00 | X8Y8 | 5.393395E-20 |
| 15 | X5 | 0.000000E+00 | X10Y2 | 7.811774E-14 | X7Y9 | 0.000000E+00 |
| 16 | X4Y1 | 1.774297E-08 | X9Y3 | 0.000000E+00 | X6Y10 | 3.702512E-19 |
| 17 | X3Y2 | 0.000000E+00 | X8Y4 | 2.509542E-13 | X5Y11 | 0.000000E+00 |
| 18 | X2Y3 | -8.998425E-08 | X7Y5 | 0.000000E+00 | X4Y12 | -2.224627E-18 |
| 19 | X1Y4 | 0.000000E+00 | X6Y6 | 3.596124E-13 | X3Y13 | 0.000000E+00 |
| 20 | Y5 | 1.115938E-07 | X5Y7 | 0.000000E+00 | X2Y14 | 3.974424E-19 |
| 21 | X6 | -2.859198E-07 | X4Y8 | 1.401630E-13 | X1Y15 | 0.000000E+00 |
| 22 | X5Y1 | 0.000000E+00 | X3Y9 | 0.000000E+00 | Y16 | -1.724578E-19 |
| 23 | X4Y2 | -8.752807E-07 | X2Y10 | 8.562239E-14 | X17 | 0.000000E+00 |
| 24 | X3Y3 | 0.000000E+00 | X1Y11 | 0.000000E+00 | X16Y1 | -1.292728E-20 |
| 25 | X2Y4 | -8.593920E-07 | Y12 | 2.754500E-15 | X15Y2 | 0.000000E+00 |
| 26 | X1Y5 | 0.000000E+00 | X13 | 0.000000E+00 | X14Y3 | 1.392225E-20 |
| 27 | Y6 | -2.828226E-07 | X12Y1 | -1.604705E-15 | X13Y4 | 0.000000E+00 |
| 28 | X7 | 0.000000E+00 | X11Y2 | 0.000000E+00 | X12Y5 | 2.202413E-20 |
| 29 | X6Y1 | 3.012893E-10 | X10Y3 | 1.549705E-15 | X11Y6 | 0.000000E+00 |
| 30 | X5Y2 | 0.000000E+00 | X9Y4 | 0.000000E+00 | X10Y7 | 3.200042E-20 |
| 31 | X4Y3 | -1.251446E-09 | X8Y5 | 1.388022E-15 | X9Y8 | 0.000000E+00 |
| 32 | X3Y4 | 0.000000E+00 | X7Y6 | 0.000000E+00 | X8Y9 | 3.904659E-20 |
| 33 | X2Y5 | 5.328086E-09 | X6Y7 | 1.495829E-15 | X7Y10 | 0.000000E+00 |
| 34 | X1Y6 | 0.000000E+00 | X5Y8 | 0.000000E+00 | X6Y11 | 2.567616E-20 |
| 35 | Y7 | -4.352442E-09 | X4Y9 | 4.481861E-15 | X5Y12 | 0.000000E+00 |
| 36 | X8 | 3.228839E-09 | X3Y10 | 0.000000E+00 | X4Y13 | 2.923810E-20 |
| 37 | X7Y1 | 0.000000E+00 | X2Y11 | -8.794329E-15 | X3Y14 | 0.000000E+00 |
| 38 | X6Y2 | 1.368725E-08 | X1Y12 | 0.000000E+00 | X2Y15 | -3.319401E-20 |
| 39 | X5Y3 | 0.000000E+00 | Y13 | 4.889038E-15 | X1Y16 | 0.000000E+00 |
| 40 | X4Y4 | 2.024423E-08 | X14 | 8.229728E-17 | Y17 | 1.699138E-20 |
| 41 | X3Y5 | 0.000000E+00 | X13Y1 | 0.000000E+00 | X18 | 1.140716E-22 |
| 42 | X2Y6 | 1.322356E-08 | X12Y2 | 1.164010E-16 | X17Y1 | 0.000000E+00 |
| 43 | X1Y7 | 0.000000E+00 | X11Y3 | 0.000000E+00 | X16Y2 | 1.132950E-21 |
| 44 | Y8 | 3.247396E-09 | X10Y4 | -1.845098E-16 | X15Y3 | 0.000000E+00 |
| 45 | X9 | 0.000000E+00 | X9Y5 | 0.000000E+00 | X14Y4 | -5.246793E-22 |
| 46 | X8Y1 | -1.708619E-11 | X8Y6 | -2.472678E-16 | X13Y5 | 0.000000E+00 |
| 47 | X7Y2 | 0.000000E+00 | X7Y7 | 0.000000E+00 | X12Y6 | -1.100837E-21 |
| 48 | X6Y3 | -6.865539E-12 | X6Y8 | -4.082845E-16 | X11Y7 | 0.000000E+00 |
| 49 | X5Y4 | 0.000000E+00 | X5Y9 | 0.000000E+00 | X10Y8 | -3.100087E-22 |
| 50 | X4Y5 | 1.860427E-11 | X4Y10 | 5.523849E-16 | X9Y9 | 0.000000E+00 |
| 51 | X3Y6 | 0.000000E+00 | X3Y11 | 0.000000E+00 | X8Y10 | -1.477609E-21 |
| 52 | X2Y7 | -1.323970E-10 | X2Y12 | -9.663837E-17 | X7Y11 | 0.000000E+00 |
| 53 | X1Y8 | 0.000000E+00 | X1Y13 | 0.000000E+00 | X6Y12 | -9.021442E-22 |
| 54 | Y9 | 8.149267E-11 | Y14 | 5.771427E-17 | X5Y13 | 0.000000E+00 |
| 55 | X10 | -8.797627E-12 | X15 | 0.000000E+00 | X4Y14 | 2.425479E-21 |
| 56 | X9Y1 | 0.000000E+00 | X14Y1 | 7.138612E-18 | X3Y15 | 0.000000E+00 |
| 57 | X8Y2 | -5.500846E-11 | X13Y2 | 0.000000E+00 | X2Y16 | -7.707399E-22 |
| 58 | X7Y3 | 0.000000E+00 | X12Y3 | -8.598305E-18 | X1Y17 | 0.000000E+00 |
| 59 | X6Y4 | -1.159260E-10 | X11Y4 | 0.000000E+00 | Y18 | 1.857801E-22 |
| 60 | X5Y5 | 0.000000E+00 | X10Y5 | -1.103127E-17 | | |
| 61 | X4Y6 | -1.051355E-10 | X9Y6 | 0.000000E+00 | | |
| 62 | X3Y7 | 0.000000E+00 | X8Y7 | -1.524132E-17 | | |
| 63 | X2Y8 | -5.235345E-11 | X7Y8 | 0.000000E+00 | | |
| 64 | X1Y9 | 0.000000E+00 | X6Y9 | -1.302251E-17 | | |
| 65 | Y10 | -9.461863E-12 | X5Y10 | 0.000000E+00 | | |

Fig. 19

| No. | LENS AREA (SA0) | LIGHT PATH AREA (SA1) | SA1／SA0 | |
|---|---|---|---|---|
| 11 | 1152. 09 | 567. 97 | 0. 49 | LENS L15 |
| 12 | 1104. 47 | 510. 99 | 0. 46 | |
| 13 | 860. 49 | 307. 75 | 0. 36 | LENS L16 |
| 14 | 1046. 35 | 348. 77 | 0. 33 | |
| 15 | 1104. 47 | 338. 18 | 0. 31 | LENS L21 |
| 16 | 1069. 41 | 347. 08 | 0. 32 | |

Fig. 20

108
7
120
IM1
L201
SS202
111
SS11
152
SS12
101
110

## INTERNATIONAL SEARCH REPORT

International application No.
PCT/JP2017/017089

A. CLASSIFICATION OF SUBJECT MATTER
*G02B17/08*(2006.01)i, *G02B13/16*(2006.01)i, *G02B13/18*(2006.01)i, *G03B21/14*(2006.01)i

According to International Patent Classification (IPC) or to both national classification and IPC

B. FIELDS SEARCHED

Minimum documentation searched (classification system followed by classification symbols)
G02B17/08, G02B13/16, G02B13/18, G03B21/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2009-300526 A (Konica Minolta Opto, Inc.), 24 December 2009 (24.12.2009), paragraphs [0053] to [0085]; example 6; fig. 17 to 19 & US 2009/0303607 A1 paragraphs [0078] to [0117]; example 6; fig. 17 to 19 | 1-2,6-12, 14-18<br>3-5,13 |
| A | JP 2012-253602 A (Nikon Corp.), 20 December 2012 (20.12.2012), entire text; all drawings (Family: none) | 1-18 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 July 2017 (24.07.17) | 08 August 2017 (08.08.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/017089

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-300928 A (Canon Inc.), 27 October 2005 (27.10.2005), entire text; all drawings & US 2005/0225876 A1 the whole document & EP 1586929 A1 & DE 602005009062 D | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013005444 A
- JP 2015179270 A